(19)

Europäisches
Patentamt
European
Patent Office
Office européen
des brevets

(11) **EP 4 776 543 A1**

(12) **EUROPEAN PATENT APPLICATION**

published in accordance with Art. 153(4) EPC

(43) Date of publication:
**15.07.2026 Bulletin 2026/29**

(21) Application number: **24871028.7**

(22) Date of filing: **27.09.2024**

(51) International Patent Classification (IPC):
***H04L 1/00*** (2006.01)

(52) Cooperative Patent Classification (CPC):
**H04B 1/7163; H04L 1/00; H04W 84/12**

(86) International application number:
**PCT/CN2024/121953**

(87) International publication number:
**WO 2025/067493 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311291495**

(71) Applicant: **HUAWEI TECHNOLOGIES CO., LTD.
Shenzhen, Guangdong 518129 (CN)**

(72) Inventors:
• **LI, Ying
Shenzhen, Guangdong 518129 (CN)**
• **HUANG, Lei
Shenzhen, Guangdong 518129 (CN)**
• **LIN, Wei
Shenzhen, Guangdong 518129 (CN)**
• **HU, Mengshi
Shenzhen, Guangdong 518129 (CN)**
• **GAN, Ming
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57) A communication method and apparatus are provided, are applied to a wireless local area network system that supports the 802.11 series protocols, for example, a next-generation Wi-Fi protocol of IEEE 802.11ax, such as 802.11be, Wi-Fi 7, or EHT, for another example, a next-generation of 802.11be, such as 802.11bn or Wi-Fi 8, 802.11ay, or 802.11aj, and may be further applied to a UWB-based wireless personal area network system, a sensing (sensing) system, and the like. A first communication apparatus sends a PPDU, and a second communication apparatus receives the PPDU. The PPDU corresponds to at least one target user, the PPDU includes a data field corresponding to the target user, and a parameter $N_{SD,short}$ corresponding to the target user is determined based on an RU/MRU used to transmit the data field and an MCS of the data field. This effectively reduces encoding/decoding time and improves encoding/decoding efficiency.

FIG. 2

## Description

This application claims priority to Chinese Patent Application No. 202311291495.3, filed with the China National Intellectual Property Administration on September 28, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

A wireless local area network (wireless local area network, WLAN) starts from 802.11a/g, and has evolved into 802.11n, 802.11ac, 802.11ax, 802.11be, and 802.11bn. The 802.11n standard is also referred to as high throughput (high throughput, HT), the 802.11ac standard is also referred to as very high throughput (very high throughput, VHT), the 802.11ax standard (Wi-Fi 6) is also referred to as high efficiency (high efficient, HE), the 802.11be standard (Wi-Fi 7) is also referred to as extremely high throughput (Extremely High Throughput, EHT), and the 802.11bn standard (Wi-Fi 8) is also referred to as ultra high reliability (ultra high reliability, UHR). Standards such as 802.11a/b/g before HT are collectively referred to as non-high throughput (Non-HT).

Starting from 802.11ax, a concept of a resource unit (resource unit, RU) is introduced, and an access point (access point, AP) may simultaneously communicate with a plurality of stations (station, STA). A bandwidth of 80 MHz is used as an example. RUs obtained through division that are specified in 11ax include 26-tone, 52-tone, 106-tone, 242-tone, 484-tone, and 996-tone. For a 160 MHz PPDU, there is 2x996-tone. In 11be, concepts of a bandwidth of 320 MHz and a multiple resource unit (multiple resource unit, MRU) are introduced, and corresponding RUs and a plurality of MRUs are defined: 52+26-tone, 106+26-tone, 484+242-tone, 996+484-tone, 996+484+242-tone, 2x996+484-tone, 3x996-tone, 3x996+484-tone, and 4x996-tone. Total quantities (for example, $N_{SD}$) of data subcarriers in different RUs/MRUs are different. In the foregoing standards, $N_{SD,short}$ corresponding to each RU/MRU is further defined for each RU/MRU. The parameter may be used for pre-forward error correction coding (forward error code, FEC) (pre-FEC) padding (pre-FEC padding).

A value of the currently defined $N_{SD,short}$ causes low encoding/decoding efficiency.

## SUMMARY

Embodiments of this application provide a communication method and apparatus, to effectively reduce encoding/decoding time and improve encoding/decoding efficiency.

According to a first aspect, an embodiment of this application provides a communication method. The method is applied to a first communication apparatus, the first communication apparatus may include a WLAN device, a chip or a functional module disposed in the WLAN device, or the like, and the method includes:

generating a physical layer (physical layer, PHY) protocol data unit (PHY protocol data unit, PPDU), where the PPDU corresponds to at least one target user, the PPDU includes a data field corresponding to the target user, a parameter $N_{SD,short}$ corresponding to the target user is determined based on a resource unit (resource unit, RU) or multiple resource unit (multiple resource unit, MRU) used to transmit the data field and a modulation and coding scheme (modulation and coding scheme, MCS) of the data field, $N_{SD,short} \leq \frac{1}{N} \times N_{SD}$, or $N_{SD,short} \geq \frac{1}{N} \times N_{SD}$, or

$|N_{SD,short} - \frac{1}{N} N_{SD}| \leq \varepsilon$, and $\varepsilon \leq \frac{M}{2}$, a value of the parameter $N_{SD}$ is equal to a total quantity of data subcarriers in the RU or MRU used to transmit the data field, the value of the parameter $N_{SD}$ is greater than 3920, the parameter $N_{SD,short}$ indicates a quantity of data subcarriers corresponding to the 1 st segment in N segments, a value of N is the same as a quantity of segments obtained by dividing the last OFDM symbol occupied by the data field, N is a positive integer, and M is a positive integer; and sending the PPDU.

In this embodiment of this application, the first communication apparatus generates the PPDU based on the parameter $N_{SD,short}$ that satisfies the foregoing features. This can effectively reduce an encoding time of the first communication apparatus and a decoding time of a second communication apparatus, thereby improving encoding/decoding efficiency.

According to a second aspect, an embodiment of this application provides a communication method. The method is applied to a second communication apparatus, the second communication apparatus may include a WLAN device, a chip or a functional module disposed in the WLAN device, or the like, and the method includes:

receiving a physical layer protocol data unit PPDU, where the PPDU corresponds to at least one target user, the PPDU includes a data field corresponding to the target user, a parameter $N_{SD,short}$ corresponding to the target user is determined based on a resource unit RU or multiple resource unit MRU used to transmit the data field and a modulation and coding scheme MCS of the data field, $N_{SD,short} \leq \frac{1}{N} \times N_{SD}$ , or $N_{SD,short} \geq \frac{1}{N} \times N_{SD}$ , or

$|N_{SD,short} - \frac{1}{N} N_{SD}| \leq \varepsilon$ , and $\varepsilon \leq \frac{M}{2}$ , a value of the parameter $N_{SD}$ is equal to a total quantity of data subcarriers in the RU or MRU used to transmit the data field, the value of the parameter $N_{SD}$ is greater than 3920, the parameter $N_{SD,short}$ indicates a quantity of data subcarriers corresponding to the 1st segment in N segments, a value of N is the same as a quantity of segments obtained by dividing the last OFDM symbol occupied by the data field, N is a positive integer, and M is a positive integer; and parsing the PPDU.

With reference to the first aspect or the second aspect, in a possible implementation, all of the 1st segment to an (N-1)th segment in the N segments correspond to a same quantity of data subcarriers.

With reference to the first aspect or the second aspect, in a possible implementation, when N=4, M=6, and an MCS index ranges from y to z, the RU or MRU used to transmit the data field and $N_{SD,short}$ satisfy the following relationship:

| RU or MRU size | Value of $N_{SD,short}$ |
|---|---|
| 4x996+484-tone | 1092 |
| 5x996-tone | 1224 |
| 5x996+484-tone | 1338 |
| 6x996-tone | 1470 |
| 6x996+484-tone | 1584 |
| 7x996-tone | 1710 |
| 7x996+484-tone | 1830 |
| 8x996-tone | 1956 |

Herein, y and z are used to identify the MCS index, and both y and z are integers greater than or equal to 0.

With reference to the first aspect or the second aspect, in a possible implementation, $N_{SD,short}$ and $N_{SD}$ satisfy the following relationship:

$$N_{SD,short} = \text{floor}(N_{SD} \div N \div M) \times M$$

Herein, floor(x) indicates to round down x, x = $N_{SD} \div N \div M$, and M is a positive integer.

With reference to the first aspect or the second aspect, in a possible implementation, when N=4, M=6, and an MCS index ranges from y to z, the RU or MRU used to transmit the data field and $N_{SD,short}$ satisfy the following relationship:

| RU or MRU size | Value of $N_{SD,short}$ |
|---|---|
| 4x996+484-tone | 1098 |
| 5x996-tone | 1230 |
| 5x996+484-tone | 1344 |
| 6x996-tone | 1470 |
| 6x996+484-tone | 1590 |
| 7x996-tone | 1716 |
| 7x996+484-tone | 1836 |
| 8x996-tone | 1962 |

Herein, y and z are used to identify the MCS index, and both y and z are integers greater than or equal to 0.

With reference to the first aspect or the second aspect, in a possible implementation, $N_{SD,short}$ and $N_{SD}$ satisfy the following relationship:

$$N_{SD,short} = \text{ceil}(N_{SD} \div \text{N} \div \text{M}) \times \text{M}$$

Herein, ceil(x) indicates to round up $x$ to a minimum integer, $x = N_{SD} \div \text{N} \div \text{M}$, and M is a positive integer.

With reference to the first aspect or the second aspect, in a possible implementation, when N=4, M=6, and an MCS index ranges from y to z, the RU or MRU used to transmit the data field and $N_{SD,short}$ satisfy the following relationship:

| RU or MRU size | Value of $N_{SD,short}$ |
|---|---|
| 4x996+484-tone | 1098 |
| 5x996-tone | 1224 |
| 5x996+484-tone | 1344 |
| 6x996-tone | 1470 |
| 6x996+484-tone | 1590 |
| 7x996-tone | 1716 |
| 7x996+484-tone | 1830 |
| 8x996-tone | 1962 |

Herein, y and z are used to identify the MCS index, and both y and z are integers greater than or equal to 0.

With reference to the first aspect or the second aspect, in a possible implementation, $N_{SD,short}$ and $N_{SD}$ satisfy the following relationship:

$$N_{SD,short} = \text{round}(N_{SD} \div \text{N} \div \text{M}) \times \text{M}$$

Herein, round(x) indicates to round off x, and $x = N_{SD} \div \text{N} \div M.$

With reference to the first aspect or the second aspect, in a possible implementation, y=0, and z=13.

With reference to the first aspect or the second aspect, in a possible implementation, a bandwidth used to transmit the PPDU is 480 MHz or 640 MHz.

According to a third aspect, an embodiment of this application provides a communication method. The method is applied to a first communication apparatus, the first communication apparatus may include a WLAN device, a chip or a functional module disposed in the WLAN device, or the like, and the method includes:

sending a physical layer protocol data unit PPDU, where the PPDU corresponds to at least one target user, the PPDU includes a data field corresponding to the target user, a parameter $N_{SD,short}$ corresponding to the target user is determined based on a resource unit RU or multiple resource unit MRU used to transmit the data field and a modulation and coding scheme MCS of the data field, a value of the parameter $N_{SD}$ is equal to a total quantity of data subcarriers in the RU or MRU used to transmit the data field, the parameter $N_{SD,short}$ indicates a quantity of data subcarriers corresponding to the 1 [st] segment in N segments, and an RU or MRU size of the data field and a value of the parameter $N_{SD,short}$ satisfies a relationship indicated by any row in any one of the following tables:

| RU or MRU size | Value of $N_{SD,short}$ |
|---|---|
| 4x996+484-tone | 1092 |
| 5x996-tone | 1224 |
| 5x996+484-tone | 1338 |
| 6x996-tone | 1470 |
| 6x996+484-tone | 1584 |
| 7x996-tone | 1710 |
| 7x996+484-tone | 1830 |

(continued)

| RU or MRU size | Value of $N_{SD,short}$ |
|---|---|
| 8x996-tone | 1956 |

or

| RU or MRU size | Value of $N_{SD,short}$ |
|---|---|
| 4x996+484-tone | 1098 |
| 5x996-tone | 1230 |
| 5x996+484-tone | 1344 |
| 6x996-tone | 1470 |
| 6x996+484-tone | 1590 |
| 7x996-tone | 1716 |
| 7x996+484-tone | 1836 |
| 8x996-tone | 1962 |

or

| RU or MRU size | Value of $N_{SD,short}$ |
|---|---|
| 4x996+484-tone | 1098 |
| 5x996-tone | 1224 |
| 5x996+484-tone | 1344 |
| 6x996-tone | 1470 |
| 6x996+484-tone | 1590 |
| 7x996-tone | 1716 |
| 7x996+484-tone | 1830 |
| 8x996-tone | 1962 |

or

| RU or MRU size | Value of $N_{SD,short}$ |
|---|---|
| 4x996+484-tone | 1104 |
| 5x996-tone | 1224 |
| 5x996+484-tone | 1344 |
| 6x996-tone | 1476 |
| 6x996+484-tone | 1596 |
| 7x996-tone | 1716 |
| 7x996+484-tone | 1836 |
| 8x996-tone | 1968 |

or

| RU or MRU size | Value of $N_{SD,short}$ |
|---|---|
| 4x996+484-tone | 1104 |
| 5x996-tone | 1230 |
| 5x996+484-tone | 1350 |
| 6x996-tone | 1476 |
| 6x996+484-tone | 1596 |
| 7x996-tone | 1722 |
| 7x996+484-tone | 1842 |
| 8x996-tone | 1968 |

According to a fourth aspect, an embodiment of this application provides a communication method. The method is applied to a second communication apparatus, the second communication apparatus may include a WLAN device, a chip or a functional module disposed in the WLAN device, or the like, and the method includes:

receiving a physical layer protocol data unit PPDU, where the PPDU corresponds to at least one target user, the PPDU includes a data field corresponding to the target user, a parameter $N_{SD,short}$ corresponding to the target user is determined based on a resource unit RU or multiple resource unit MRU used to transmit the data field and a modulation and coding scheme MCS of the data field, the parameter $N_{SD,short}$ indicates a quantity of data subcarriers corresponding to the 1 $^{st}$ segment in N segments, a value of the parameter $N_{SD}$ is equal to a total quantity of data subcarriers in the RU or the MRU used to transmit the data field, and an RU or MRU size of the data field and a value of the parameter $N_{SD,short}$ satisfies a relationship indicated by any row in any table shown in the third aspect.

According to a fifth aspect, an embodiment of this application provides a first communication apparatus, configured to perform the method in the first aspect or any possible implementation. The first communication apparatus includes a module that performs the method in the first aspect, the third aspect, or any possible implementation.

According to a sixth aspect, an embodiment of this application provides a second communication apparatus, configured to perform the method in the second aspect or any possible implementation. The second communication apparatus includes a module that performs the method in the second aspect, the fourth aspect, or any possible implementation.

According to a seventh aspect, an embodiment of this application provides a first communication apparatus. The first communication apparatus includes a processor, configured to perform the method in the first aspect, the third aspect, or any possible implementation. The processor is configured to execute a program stored in a memory. When the program is executed, the method in the first aspect or any possible implementation is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated. For example, the first communication apparatus may be a chip.

In a possible implementation, the first communication apparatus further includes a transceiver. The transceiver is configured to receive information or send information (for example, a PPDU).

According to an eighth aspect, an embodiment of this application provides a second communication apparatus. The second communication apparatus includes a processor, configured to perform the method in the second aspect, the fourth aspect, or any possible implementation. The processor is configured to execute a program stored in a memory. When the program is executed, the method in the second aspect, the fourth aspect, or any possible implementation is performed.

In a possible implementation, the memory is located outside the second communication apparatus.

In a possible implementation, the memory is located inside the second communication apparatus.

In this embodiment of this application, the processor and the memory may alternatively be integrated into one device. In other words, the processor and the memory may alternatively be integrated. For example, the second communication apparatus may be a chip.

In a possible implementation, the second communication apparatus further includes a transceiver. The transceiver is configured to receive information (for example, a PPDU) or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method in the first aspect, the third aspect, or any possible implementation.

In a possible implementation, that the interface is configured to output the information includes: the interface is configured to output a PPDU. For example, the logic circuit is configured to generate the PPDU.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method in the second aspect, the fourth aspect, or any possible implementation.

In a possible implementation, that the interface is configured to input the information includes: the interface is configured to input a PPDU. For example, the logic circuit is configured to parse the PPDU.

According to an eleventh aspect, an embodiment of this application provides a computer-readable storage medium. The computer-readable storage medium is configured to store a computer program. When the computer program is run on a computer, the method according to the first aspect, the second aspect, the third aspect, the fourth aspect, or any possible implementation is performed.

According to a twelfth aspect, an embodiment of this application provides a computer program product. The computer program product includes a computer program or computer code. When the computer program or the computer code is run on a computer, the method according to the first aspect, the second aspect, the third aspect, the fourth aspect, or any possible implementation is performed.

According to a thirteenth aspect, an embodiment of this application provides a computer program. When the computer program is run on a computer, the method according to the first aspect, the second aspect, the third aspect, the fourth aspect, or any possible implementation is performed.

According to a fourteenth aspect, an embodiment of this application provides a communication system. The communication system includes a first communication apparatus and a second communication apparatus.

In a possible implementation, the first communication apparatus is configured to perform the method according to the first aspect or any possible implementation of the first aspect, and the second communication apparatus is configured to perform the method according to the second aspect or any possible implementation of the second aspect.

In a possible implementation, the first communication apparatus is configured to perform the method in the third aspect or any possible implementation of the third aspect, and the second communication apparatus is configured to perform the method in the fourth aspect or any possible implementation of the fourth aspect.

## BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram of division into segments of the last orthogonal frequency division multiplexing (orthogonal frequency division multiplexing, OFDM) symbol of a data field corresponding to a target user according to an embodiment of this application;
FIG. 4 is a diagram of division into segments of the last OFDM symbol of a data field corresponding to a target user according to an embodiment of this application;
FIG. 5a is a diagram of a transmission mode of a PPDU according to an embodiment of this application;
FIG. 5b is a diagram of another transmission mode of a PPDU according to an embodiment of this application;
FIG. 5c is a diagram of still another transmission mode of a PDU according to an embodiment of this application;
FIG. 5d is a diagram of yet another transmission mode of a PPDU according to an embodiment of this application;
FIG. 6 is a diagram of a padding process of the last OFDM symbol of a data field corresponding to a target user according to an embodiment of this application;
FIG. 7a is a diagram of a simulation result according to an embodiment of this application;
FIG. 7b is a diagram of another simulation result according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

## DESCRIPTION OF EMBODIMENTS

For ease of understanding technical solutions of this application, the following further describes this application with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

Embodiments of this application provide a communication method and apparatus, to effectively reduce encoding time of a first communication apparatus and decoding time of a second communication apparatus, and improve encoding/decoding efficiency.

The following describes a communication system in embodiments of this application.

The technical solutions provided in embodiments of this application may be applied to a WLAN system, for example, Wi-Fi. For example, the method provided in embodiments of this application may be applied to IEEE 802.11 series protocols such as the 802.11be protocol, the 802.11bn protocol, or a next-generation protocol of the 802.11bn protocol. Examples are not enumerated. The technical solutions provided in embodiments of this application may be further applied to a wireless personal area network (wireless personal area network, WPAN) based on millimeter wave (millimeter wave, MMW) and ultra wideband (ultra wideband, UWB) technologies. For example, the method provided in embodiments of this application may be applied to IEEE 802.15 series protocols such as the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems such as an internet of things (internet of things, IoT) system, a vehicle to X (vehicle to X, V2X) system, a narrowband internet of things (narrowband internet of things, NB-IoT) system, a long term evolution (long term evolution, LTE) system, a 5th-generation (5th-generation, 5G) communication system, and a new communication system emerging in future communication development.

The WLAN system can provide high-rate and low-latency transmission. With continuous evolution of WLAN application scenarios, the WLAN system is to be applied to more scenarios or industries such as the internet of things industry, the internet of vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in smart city, a smart device (for example, a smart camera, a projector, a display, a television, a speaker, a refrigerator, or a washing machine) in smart home, a node in the internet of things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an internet of vehicles device in the internet of vehicles, an infrastructure (for example, a vending machine, a self-service navigation console in a shopping mall or supermarket, a self-service cashier, or a self-service ordering machine) in a daily life scenario, a device in a large sports and music venue, or the like.

Although embodiments of this application mainly use a WLAN as an example, especially a network applied to IEEE 802.11 series standards, embodiments of this application may support Wi-Fi 8, which may also be referred to as ultra-high reliability (ultra-high reliability, UHR) or ultra-high reliability and throughput (ultra-high reliability and throughput, UHRT). Examples are not enumerated herein. Various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

In a possible implementation, the method provided in embodiments of this application may be implemented by a communication apparatus in a communication system. For example, the communication apparatus may be an access point (access point, AP) or a station (station, STA).

The AP is an apparatus having a wireless communication function, supports communication or sensing by using a WLAN protocol, has a function of communicating with or sensing another device (for example, a non-AP STA or another access point) in a WLAN network, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip, a processing system, a functional module, or the like installed in the entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating with or sensing another non-AP STA or access point in a WLAN. In a WLAN system, the station may be referred to as a non-access point station (non-access point station, non-AP STA). For example, the STA is any user communication device that allows a user to communicate with or sense the AP and then communicate with the WLAN. The apparatus having the wireless communication function may be an entire device, or may be a chip, a processing system, a functional module, or the like installed in an entire device. The device in which the chip, the processing system, or the functional module is installed may implement a method and a function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include IEEE 802.11 series protocols, for example, the 802.11n/802.11ac/802.11ax/802.11be/802.11bn protocol. Certainly, protocols subsequent to 802.11bn may also be supported.

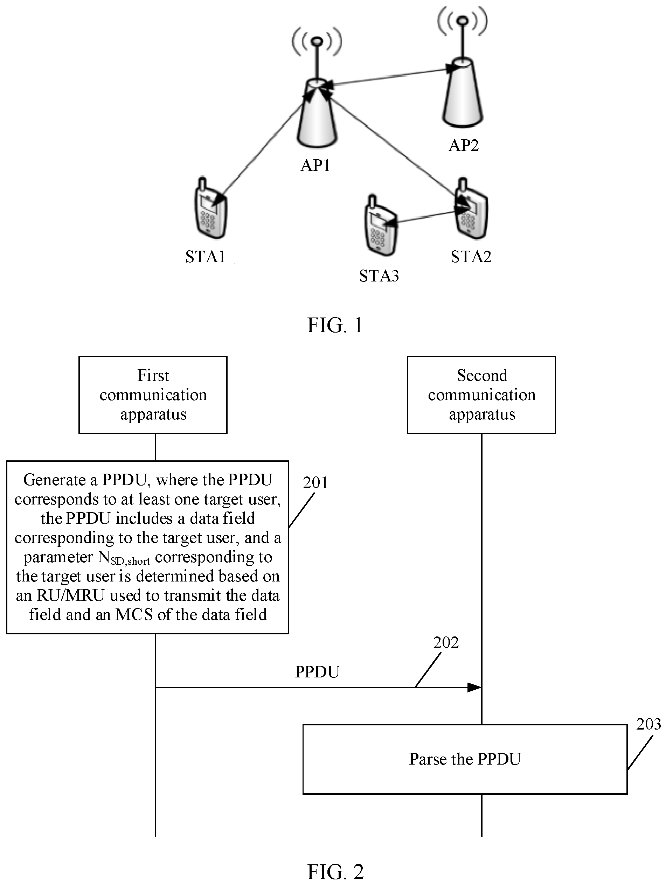

FIG. 1 is a diagram of an architecture of a communication system according to an embodiment of this application. The communication system may include one or more APs and one or more STAs. FIG. 1 shows one access point AP1 and three stations STA1, STA2, and STA3. For example, the method provided in embodiments of this application may be applied to data communication between one AP and one or more STAs (for example, communication between API and STA1 or communication of AP1 with STA1 and STA2 shown in FIG. 1), communication between APs (for example, communication between AP2 and AP1 shown in FIG. 1), or communication between STAs (for example, communication between STA2 and STA3 shown in FIG. 1). The method provided in embodiments of this application may be applied to but not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

It can be understood that in FIG. 1, an example in which the STA is a mobile phone and the AP is a router is used. This does not mean that types of the AP and the STA in embodiments of this application are limited. In addition, FIG. 1 shows only one AP and three STAs as an example. There may be more or less APs or STAs. This is not limited in embodiments of this application.

From different perspectives of sending a PPDU and receiving a PPDU, in the following content, a first communication apparatus may be understood as a communication apparatus that sends a PPDU, and a second communication apparatus may be understood as a communication apparatus that receives a PPDU. In an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a STA. In still another example, both the first communication apparatus and the second communication apparatus may be STAs or APs. In still another example, the first communication apparatus may be a STA, and the second communication apparatus may be an AP. In still another example, at least one of the first communication apparatus and the second communication apparatus may be a multi-link device (multi-link device, MLD), or the like. Examples are not enumerated in embodiments of this application. For example, the multi-link device (multi-link device, MLD) means that the device simultaneously has a plurality of stations (for example, APs or non-AP STAs), which operate on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like installed in an entire device. The device in which the chip, the processing system, or the module is installed may implement a method and a function in embodiments of this application under control of the chip, the processing system, or the module. The multi-link device may implement wireless communication in compliance with 802.11 series protocols, to communicate with another device. The another device may be a multi-link device, or may not be a multi-link device. Frequency bands on which the multi-link device operates may include but are not limited to sub 1 GHz, 2.4 GHz, 5 GHz, 6 GHz, and the like. Examples are not enumerated herein.

It may be understood that in embodiments of this application, the method provided in embodiments of this application is described by using two sides: the first communication apparatus and the second communication apparatus. However, in a process in which the first communication apparatus and the second communication apparatus transmit a PPDU, the PPDU may be further forwarded through another apparatus, such as forwarding the PPDU between the first communication apparatus and the second communication apparatus through a forwarding apparatus. An apparatus other than the first communication apparatus and the second communication apparatus is not limited in embodiments of this application.

FIG. 2 is a schematic flowchart of a communication method according to an embodiment of this application. For related descriptions of a first communication apparatus and a second communication apparatus in the method, refer to FIG. 1. Details are not described herein again. As shown in FIG. 2, the method includes the following steps.

201: The first communication apparatus generates a PPDU, where the PPDU corresponds to at least one target user, the PPDU includes a data field corresponding to the target user, and a parameter $N_{SD,short}$ corresponding to the target user is determined based on an RU/MRU used to transmit the data field and an MCS of the data field.

A value of a parameter $N_{SD}$ is equal to a total quantity of data subcarriers in the RU/MRU used to transmit the data field, the value of the parameter $N_{SD}$ is greater than 3920, and the parameter $N_{SD,short}$ indicates a quantity of data subcarriers corresponding to the 1$^{st}$ segment in N segments. For example, $N_{SD,short} \leq \frac{1}{N} \times N_{SD}$, or

$N_{SD,short} \geq \frac{1}{N} \times N_{SD}$, or $\left| N_{SD,short} - \frac{1}{N} N_{SD} \right| \leq \varepsilon$, and $\varepsilon \leq \frac{M}{2}$. A value of N is the same as a quantity of segments obtained by dividing the last OFDM symbol occupied by the data field, N is a positive integer, and M is a positive integer. The following provides detailed descriptions:

The PPDU may correspond to at least one target user, or the PPDU may carry a physical layer service data unit (physical layer service data unit, PSDU) that needs to be transmitted to the at least one target user, or the PPDU may carry a PSDU that needs to be sent by the first communication apparatus to the at least one target user, or the at least one target user needs to receive a respective PSDU from the PPDU. For example, the second communication apparatus may be one of the at least one target user. The first communication apparatus may pad and encode the PSDU to form the data field in the PPDU. Therefore, the PPDU may include a data field corresponding to each target user. Based on a relationship between a target user and a data field, the following uses the target user as an example for description in a specific example.

A process in which the first communication apparatus generates the PPDU includes pre-FEC PHY padding or pre-FEC MAC padding, and may be applied before FEC encoding. A process in which the first communication apparatus generates the PPDU may further include post-FEC physical padding (post-FEC PHY padding), and may be applied after FEC encoding. A function of pre-FEC PHY padding or pre-FEC MAC padding may be padding a bit before encoding for a supplement to a predetermined boundary (a boundary indicated by a parameter *a* shown below). Post-FEC padding may not need encoding or decoding (or referred to as decoding), and pre-FEC padding needs encoding and decoding. Therefore, the last OFDM symbol is segmented, to reduce encoding time and decoding time of pre-FEC as much as possible, and improve decoding efficiency. For example, the first communication apparatus may encode, through pre-FEC padding, a segment indicated by the parameter a, and may perform post-FEC padding on a remaining segment in the last OFDM symbol.

For ease of description, in this embodiment of this application, pre-FEC PHY padding or pre-FEC MAC padding is collectively referred to as pre-FEC padding.

The parameter $N_{SD,short}$ is used for pre-FEC padding. Alternatively, the parameter $N_{SD,short}$ may be used to determine the parameter *a,* and the parameter *a* may be used to determine the predetermined boundary. For example, the parameter *a* may indicate a boundary that is of the last OFDM symbol of the data field corresponding to the target user and to which pre-FEC padding may be extended. For another example, the parameter $N_{SD,short}$ may indicate the quantity of data subcarriers corresponding to the 1 st segment in the N segments obtained by dividing the last OFDM symbol. For another example, the parameter $N_{SD,short}$ may indicate a size of the 1 st segment in the N segments obtained by dividing the last OFDM symbol, or indicate a size of first N-1 segments. The value of the parameter $N_{SD}$ related to the parameter $N_{SD,short}$ is equal to the total quantity of data subcarriers in the RU or MRU used to transmit the data field corresponding to the target user. For example, the value of the parameter $N_{SD}$ may be greater than 3920. Usually, when the PPDU corresponds to at least two target users, and two of the at least two target users correspond to different RUs/MRUs, the two target users also correspond to different values of the parameter $N_{SD,short}$. Although the parameter $N_{SD,short}$ has different values, a same value of *a* is determined based on the parameter $N_{SD,short}$. For a specific manner in which the parameter $N_{SD,short}$ and the parameter $N_{SD}$ are used for pre-FEC padding, refer to the following descriptions. Details are not described herein.

The following describes in detail the parameter $N_{SD,short}$ shown in this embodiment of this application. The parameter $N_{SD,short}$ may satisfy at least one of the following features:

**Feature 1:** The value of the parameter $N_{SD,short}$ is determined based on the RU or MRU (or referred to as an RU or MRU corresponding to the target user) used to transmit the data field corresponding to the target user and the MCS (or referred to as an MCS corresponding to the target user) of the data field.

In an example, there is a same total bandwidth (or referred to as a PPDU bandwidth) used to transmit the PPDU. If the target user corresponds to different RU or MRU sizes, the parameter $N_{SD,short}$ may still have different values. For example, an RU size of the data field corresponding to the target user is an RU 1, or an MRU size is an MRU 1, and the value of the parameter $N_{SD,short}$ is a value 1. For another example, an RU size of the data field corresponding to the target user is an RU 2, or an MRU size is an MRU 2, and the value of the parameter $N_{SD,short}$ is a value 2. "1" and "2" in the RU 1 and the RU 2 are intended to identify different RUs, and should not be construed as a limitation on this embodiment of this application. Other descriptions are similar. Details are not described herein again.

In another example, there is a same PPDU bandwidth, and the PPDU corresponds to at least two target users. For example, the at least two target users include a target user 1 and a target user 2. When an RU/MRU size corresponding to the target user 1 is different from an RU/MRU size corresponding to the target user 2, the two target users correspond to different values of the parameter $N_{SD,short}$.

In still another example, there is a same PPDU bandwidth. If the target user correspond to different MCSs, the parameter $N_{SD,short}$ may still have different values.

In still another example, there is a PPDU bandwidth. If an MCS corresponding to a target user 1 is different from an MCS corresponding to a target user 2, the two target users correspond to different values of the parameter $N_{SD,short}$.

**Feature 2:** $N_{SD,short} \leq \frac{1}{N} \times N_{SD}$ .

For example, when MCSE[y, z], $N_{SD,short} \leq \frac{1}{N} \times N_{SD}$ . The value of N is the same as the quantity of segments obtained by dividing the last OFDM symbol occupied by the data field. For example, N=4 or N=2. Examples are not enumerated herein. For ease of description, the following uses N=4 as an example for description in a specific example.

If the PPDU bandwidth is 480 MHz or 640 MHz, the MRU has the following several combinations: 4x996+484-tone, 5x996-tone, 5x996+484-tone, 6x996-tone, 6x996+484-tone, 7x996-tone, 7x996+484-tone, and 8x996+484-tone. Therefore, the following uses the foregoing combinations an example for description in a specific example. The features shown in this embodiment of this application may also satisfy a larger PPDU bandwidth, for example, are also applicable to a PPDU of 1280 MHz or 2560 MHz. Examples are not enumerated herein.

Usually, when MCS=q and MCS=o, corresponding $N_{SD,short}$ is obtained based on MCSE [y, z]. Therefore, in the following specific examples, $N_{SD,short}$ corresponding to MCSE [y, z] may be used as an example for description. Shown forms of the following tables are merely examples. In a specific implementation, the following shown tables may have various representation forms. For example, for different MCSs, there may be different tables (or different MCSs may not be in a same table). This is not limited in this embodiment of this application.

Table 1 shows an example of a relationship between the RU or MRU corresponding to the target user and $N_{SD,short}$ when N=4, M=6, an MCS index ranges from y to z, and the MCS index is q. For example, in Table 1, y may be equal to 0, z may be equal to 13, and q may be equal to 15. Values of y, z, and q are all shown by using an MCS index in 802.11be as an example. With evolution of standards, another MCS index may appear subsequently. This is not limited in this embodiment of this application.

Table 1

| RU or MRU size | Value of $N_{SD,short}$ | |
| --- | --- | --- |
| | MCSE[y, z] | MCSE q |
| 4x996+484-tone | 1092 | 546 |
| 5x996-tone | 1224 | 612 |
| 5x996+484-tone | 1338 | 669 |
| 6x996-tone | 1470 | 735 |
| 6x996+484-tone | 1584 | 792 |
| 7x996-tone | 1710 | 855 |
| 7x996+484-tone | 1830 | 915 |
| 8x996-tone | 1956 | 978 |

Usually, for a same RU or MRU size, a value of $N_{SD,short}$ when MCS=15 may be determined based on a value of $N_{SD,short}$ when MCS$\in$[0, 13]. Table 1 is shown by using a multiple relationship as an example, but should not be understood as a limitation on this embodiment of this application. For example, with evolution of the standards, for a same RU or MRU size, the value of $N_{SD,short}$ when MCS=15 may be equal to the value of $N_{SD,short}$ when MCS$\in$[0, 13], or an offset value may be set between the value of $N_{SD,short}$ when MCS=15 and the value of $N_{SD,short}$ when MCS$\in$[0, 13]. This is not limited in this embodiment of this application.

Table 2 shows an example of a relationship between the RU/MRU and $N_{SD}$.

Table 2

| RU or MRU size | Value of $N_{SD}$ |
| --- | --- |
| 4x996+484-tone | 4388 |
| 5x996-tone | 4900 |
| 5x996+484-tone | 5368 |
| 6x996-tone | 5880 |
| 6x996+484-tone | 6348 |
| 7x996-tone | 6860 |
| 7x996+484-tone | 7328 |
| 8x996-tone | 7840 |

$N_{SD,short}$ shown in Table 1 and $N_{SD}$ shown in Table 2 satisfy the feature 2.

Table 3 shows an example of a relationship between the RU or MRU corresponding to the target user and $N_{SD,short}$ when N=4, M=6, and the MCS index is o. For example, o may be equal to 14.

Table 3

| PPDU bandwidth | Value of $N_{SD,short}$ |
| --- | --- |
| 480 MHz | 366 |
| 640 MHz | 492 |

(continued)

| PPDU bandwidth | Value of $N_{SD,short}$ |
|---|---|
| ... | |

In this embodiment of this application, $N_{SD,short}$ and $N_{SD}$ satisfy the following relationship:

$$N_{SD,short} = \text{floor}(N_{SD} \div N \div M) \times M \quad (1)$$

Herein, floor(x) indicates to round down $x$, $x = N_{SD} \div N \div M$, and M is a positive integer. For example, if $N_{SD}$ = 4388, N=4, and M=6, $N_{SD,short}$ = floor(4388 ÷ 4 ÷ 6) × 6 = floor(182.833) × 6 = 182 × 6 = 1092. $N_{SD,short}$ = 1092 indicates that a quantity of data subcarriers corresponding to the 1st segment in four segments is 1092. For another example, a quantity of data subcarriers corresponding to each of first three segments in four segments is 1092. A quantity of data subcarriers corresponding to the last segment in the four segments is 4388-1092-1092-1092=1112. Specific calculation processes of other values are not enumerated herein. The feature 2 may be effectively satisfied based on Formula (1). For a specific determining manner of M, refer to the following descriptions. Details are not described herein.

In an example, the PPDU corresponds to one target user. If an MRU size corresponding to the target user is 4x996+484-tone, and an MCS index corresponding to the target user is 3, a value of $N_{SD,short}$ corresponding to the target user may be 1092. The first communication apparatus may determine, based on the value of $N_{SD,short}$, the parameter $a$ and a total quantity $N_{SYM}$ of OFDM symbols occupied by the data field in the PPDU. For a specific determining manner of the parameter $a$ and $N_{SYM}$, refer to the following descriptions. Details are not described herein again.

In another example, the PPDU corresponds to at least two target users. The at least two target users include the target user 1 and the target user 2. For example, if the MRU size corresponding to the target user 1 is 4x996+484-tone, and an MCS index corresponding to the target user 1 is 0, a value of $N_{SD,short}$ corresponding to the target user 1 may be 1092. If the MRU size corresponding to the target user 2 is 5x996+484-tone, and an MCS index corresponding to the target user 2 is 1, a value of $N_{SD,short}$ corresponding to the target user 2 may be 1338. For another example, if the MRU size corresponding to the target user 1 is 2x996+484-tone, and an MCS index corresponding to the target user 1 is 0, a value of $N_{SD,short}$ corresponding to the target user 1 may be 612. If the MRU size corresponding to the target user 1 is 5x996+484-tone, and an MCS index corresponding to the target user 1 is 1, a value of $N_{SD,short}$ corresponding to the target user 1 may be 1338. For another example, if the MRU size corresponding to the target user 1 is 4x996+484-tone, and an MCS index corresponding to the target user 1 is 0, a value of $N_{SD,short}$ corresponding to the target user 1 may be 1092. If the MRU size corresponding to the target user 2 is 5x996+484-tone, and an MCS index corresponding to the target user 2 is 15, a value of $N_{SD,short}$ corresponding to the target user 2 may be 669.

In this embodiment of this application, the parameter $N_{SD,short}$ satisfies the feature 2. This can effectively reduce encoding/decoding time, and improve encoding/decoding efficiency. The following provides detailed descriptions:

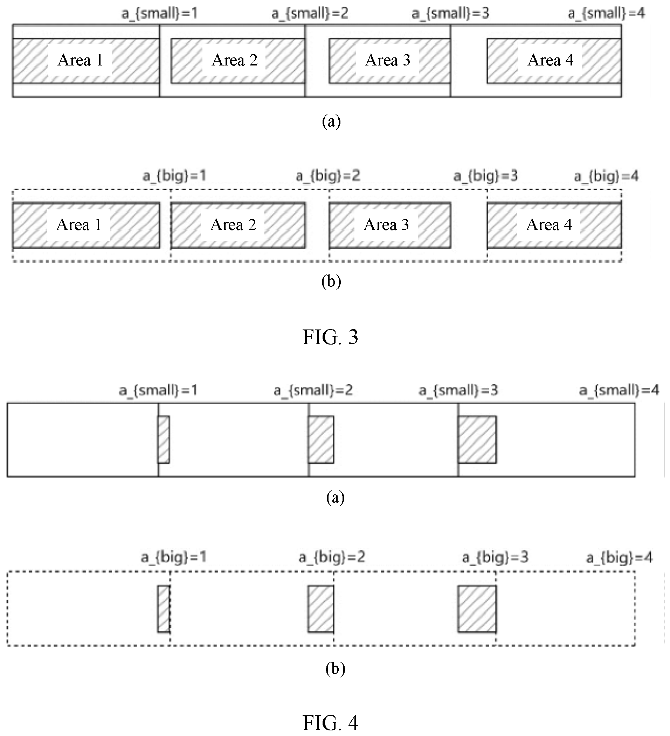

FIG. 3 is a diagram of division into segments of the last OFDM symbol in a case of different values of $N_{SD,short}$ by using N=4 as an example. In FIG. 3, a horizontal axis represents a frequency domain resource (for example, represents an RU or MRU), and a vertical axis represents a time domain resource. In FIG. 3, the horizontal axis may represent a quantity $N_{CBPS,u}$ of encoded bits in one OFDM symbol corresponding to the frequency domain resource. $N_{CBPS,u} = N_{SD,u} \cdot N_{BPSCS,u}$. A solid vertical line in (a) in FIG. 3 represents a segment boundary, and a dashed vertical line in (b) in FIG. 3 represents a segment boundary. $N_{SD,short}$ that satisfies the feature 2 in this embodiment of this application is shown in (a) in FIG. 3.

(1) When a quantity $N_{Excess,u}$ of excess data bits in the last OFDM symbol of the data field of the target user is in an area 1 to an area 3 that are indicated in shadow in FIG. 3, compared with using a larger value of $N_{SD,short}$, using a smaller value of $N_{SD,short}$ may reduce a quantity of pre-FEC padding bits (pre-FEC padding bits). The smaller value of $N_{SD,short}$ is used in (a) in FIG. 3, and the larger value of $N_{SD,short}$ is used in (b) in FIG. 3. For example, when the quantity $N_{Excess,u}$ of excess data bits in the last OFDM symbol of the data field of the target user is in the area 1, the quantity of pre-FEC padding bits is extended to a_{small}=1 in (a) in FIG. 3, and the quantity of pre-FEC padding bits is extended to a_{big} =1 in (b) in FIG. 3. Because FEC encoding needs to be performed on the quantity of pre-FEC padding bits, selecting the larger value of $N_{SD,short}$ increases extra encoding/decoding time. Therefore, $N_{SD,short}$ that satisfies the feature 2 (that is, using the small value of $N_{SD,short}$ in FIG. 3) in this embodiment of this application may reduce encoding time and decoding time of a blank area other than the area 1 in the 1st segment in (b) in FIG. 3, thereby effectively reducing encoding/decoding time and improving encoding/decoding efficiency. For another example, when the quantity $N_{Excess,u}$ of excess data bits in the last OFDM symbol of the data field of the target user is in an area 2 or the area 3, $N_{SD,short}$ that satisfies the feature 2 (that is, using the small value of $N_{SD,short}$ in FIG. 3) in this embodiment of this application can reduce encoding time and decoding time of a blank area other than the area 2 in a 2nd segment in (b) in FIG. 3, thereby effectively reducing encoding/decoding time and improving encoding/decoding efficiency.

(2) When the quantity $N_{Excess,u}$ of excess data bits in the last OFDM symbol of the data field of the target user is in a blank area in (b) in FIG. 3, a_{small}=2 (which is only an example), and initially, a_{big}=1 (which is only an example). However, when an LDPC extra symbol segment (LDPC extra symbol segment) field in (b) in FIG. 3 is set to 1, a_{big} in (b) in FIG. 3 is increased by 1 (a_{big}=2), and then processes of (5.2) and (5.3) in the following descriptions are recalculated. In (b) in FIG. 3, not only additional calculation is added, but also more padding bits are used.

Usually, an RU or MRU size corresponding to one OFDM symbol is fixed. Therefore, when the value of $N_{SD,short}$ decreases, an RU/MRU size corresponding to the 1 st segment obtained by dividing the last OFDM symbol may be reduced, and consequently, frequency domain resources corresponding to the last segment increase. For example, when the RU/MRU size corresponding to the 1 st segment obtained by dividing the last OFDM symbol decreases, an RU/MRU size corresponding to a 2nd segment of the last OFDM symbol and an RU/MRU size corresponding to a 3rd segment may also decrease accordingly. Although an RU/MRU size corresponding to the last segment obtained by dividing the last OFDM symbol is increased, when the quantity $N_{Excess,u}$ of excess data bits in the last OFDM symbol of the data field of the target user is in any one of the area 1, the area 2, and the area 3, encoding/decoding time is reduced, thereby effectively improving encoding/decoding efficiency. In addition, a probability that the quantity $N_{Excess,u}$ of excess data bits in the last OFDM symbol of the data field of the target user is in the area 1, the area 2, or the area 3 is far greater than a probability that the quantity $N_{Excess,u}$ of excess data bits in the last OFDM symbol of the data field of the target user is in an area 4.

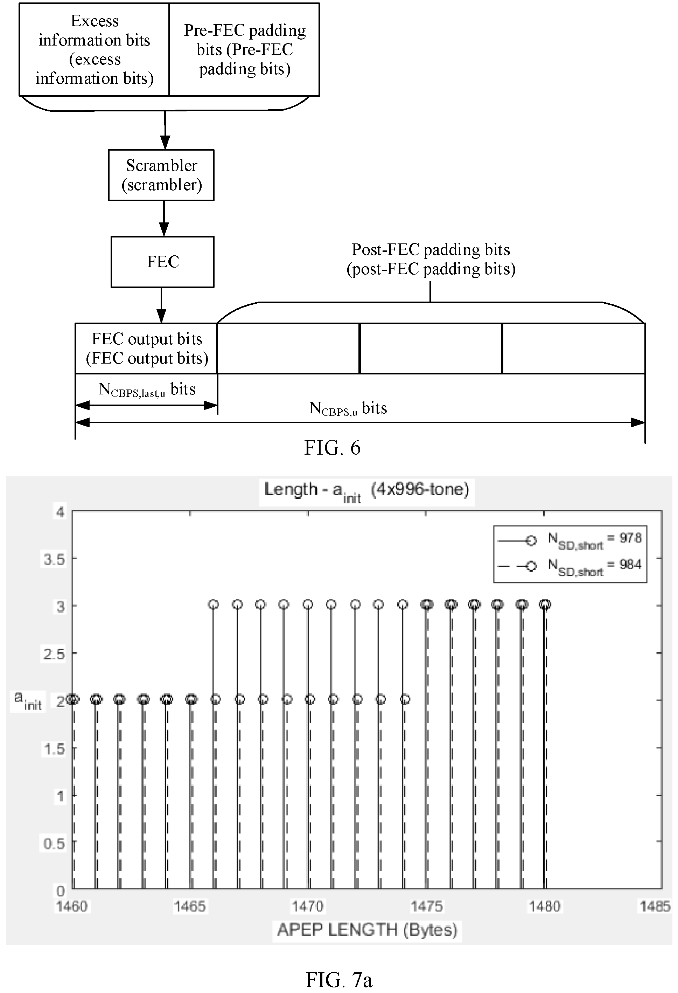

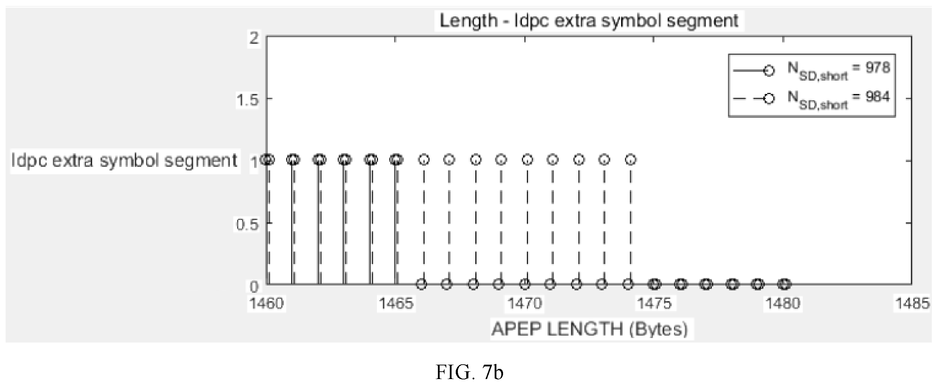

For related descriptions of a simulation result shown in this embodiment of this application, refer to FIG. 7a and FIG. 7b in the following descriptions. Details are not described herein again.

**Feature 3:**

$$N_{SD,short} \geq \frac{1}{N} \times N_{SD}.$$

For example, when MCSE[y, z], $N_{SD,short} \geq \frac{1}{N} \times N_{SD}$ . Table 4 shows an example of the relationship between the RU or MRU corresponding to the target user and $N_{SD,short}$ when N=4, M=6, the MCS index ranges from y to z, and the MCS index is q. For specific descriptions of y, z, and q, refer to Table 1. Details are not described herein again. For related descriptions of MCS=15 and MCSE[0, 13], refer to Table 1. Details are not described herein again. For the relationship between the RU/MRU and $N_{SD}$, refer to Table 2. Details are not described herein again.

Table 4

| RU or MRU size | Value of $N_{SD,short}$ | |
|---|---|---|
| | MCSE[y, z] | MCSE q |
| 4x996+484-tone | 1098 | 549 |
| 5x996-tone | 1230 | 615 |
| 5x996+484-tone | 1344 | 672 |
| 6x996-tone | 1470 | 735 |
| 6x996+484-tone | 1590 | 795 |
| 7x996-tone | 1716 | 858 |
| 7x996+484-tone | 1836 | 918 |
| 8x996-tone | 1962 | 981 |

$N_{SD,short}$ shown in Table 4 and $N_{SD}$ shown in Table 2 satisfy the feature 3.

Usually, 480 MHz corresponds to 6x996-tone. Therefore, when MCS=o and the PPDU bandwidth is 480 MHz, $N_{SD,short}$ corresponding to the target user is still 366 shown in Table 3 (for example, $N_{SD,short}$ corresponding to 3x996-tone when MCS=q). Similarly, when MCS=o and the PPDU bandwidth is 640 MHz, $N_{SD,short}$ corresponding to the target user is still 492 shown in Table 3 (for example, $N_{SD,short}$ corresponding to 4x996-tone when MCS=q).

In this embodiment of this application, $N_{SD,short}$ and $N_{SD}$ satisfy the following relationship:

$$N_{SD,short} = \text{ceil}(N_{SD} \div N \div M) \times M \quad (2)$$

Herein, ceil(x) indicates to round up *x* to a minimum integer (or indicates to return a minimum integer greater than or equal to *x*), $x = N_{SD} \div N \div M$, and M is a positive integer. For example, if $N_{SD}$ = 4388 , N=4, and M=6, $N_{SD,short}$ = ceil(4388 ÷ 4 ÷ 6) × 6 = ceil(182.833) × 6 = 183 × 6 = 1098. Specific calculation processes of other values are not enumerated herein. The feature 3 may be effectively satisfied based on Formula (2). For a specific determining manner of M, refer to the following descriptions. Details are not described herein.

FIG. 4 is a diagram of division into segments of the last OFDM symbol in a case of different values of $N_{SD,short}$ by using N=4 as an example. In FIG. 4, a horizontal axis represents a frequency domain resource, and a vertical axis represents a time domain resource. A solid vertical line in (a) in FIG. 4 represents a segment boundary, and a dashed vertical line in (b) in FIG. 4 represents a segment boundary. $N_{SD,short}$ that satisfies the feature 3 in this embodiment of this application is shown in (b) in FIG. 4.

When the quantity $N_{Excess,u}$ of excess data bits in the last OFDM symbol of the data field of the target user is in a shadow area in FIG. 4, and the LDPC extra symbol segment (LDPC extra symbol segment) field is 0, compared with using a smaller value of $N_{SD,short}$, using a larger value of $N_{SD,short}$ may reduce the quantity of pre-FEC padding bits. For example, when the quantity $N_{Excess,u}$ of excess data bits in the last OFDM symbol of the data field of the target user is in the 1st shadow area, the quantity of pre-FEC padding bits needs to be extended to a_{small}=2 in (a) in FIG. 4, and the quantity of pre-FEC padding bits needs to be extended to a_{big}=1 in (b) in FIG. 4. Therefore, $N_{SD,short}$ that satisfies the feature 3 (that is, using the larger value of $N_{SD,short}$ in FIG. 4) in this embodiment of this application may reduce encoding time and decoding time of a blank area other than the shadow area in a 2nd segment in (a) in FIG. 4, thereby effectively reducing encoding/decoding time and improving encoding/decoding efficiency.

**Feature 4:**

$$|N_{SD,short} - \frac{1}{N} N_{SD}| \leq \varepsilon \ \text{ and } \ \varepsilon \leq \frac{M}{2}.$$

For example, when MCSE[y, z], $|N_{SD,short} - \frac{1}{N} N_{SD}| \leq \varepsilon$ and $\varepsilon \leq \frac{M}{2}$ .

For example, $\varepsilon$ = 1, or $\varepsilon$ = 2, or $\varepsilon$ = 3. Specific values of $\varepsilon$ are not enumerated herein.

Table 5 shows an example of the relationship between the RU or MRU corresponding to the target user and $N_{SD,short}$ when N=4, M=6, the MCS index ranges from y to z, and the MCS index is q. For specific descriptions of y, z, and q, refer to Table 1. Details are not described herein again. For related descriptions of MCS=15 and MCSE[0, 13], refer to Table 1. Details are not described herein again. For the relationship between the RU/MRU and $N_{SD}$, refer to Table 2. Details are not described herein again.

Table 5

| RU or MRU size | Value of $N_{SD,short}$ | |
|---|---|---|
| | MCSE[y, z] | MCSE q |
| 4x996+484-tone | 1098 | 549 |
| 5x996-tone | 1224 | 612 |
| 5x996+484-tone | 1344 | 672 |
| 6x996-tone | 1470 | 735 |
| 6x996+484-tone | 1590 | 795 |
| 7x996-tone | 1716 | 858 |
| 7x996+484-tone | 1830 | 915 |
| 8x996-tone | 1962 | 981 |

$N_{SD,short}$ shown in Table 5 and $N_{SD}$ shown in Table 2 satisfy the feature 3. $N_{SD,short}$ shown in Table 6 may be referred to as being approximately equal to $\frac{1}{4} N_{SD}$ .

For the relationship between the RU or MRU corresponding to the target user and $N_{SD,short}$ when N=4, M=6, and the MCS index is o, refer to Table 3. Details are not described herein again. In this embodiment of this application, $N_{SD,short}$ and $N_{SD}$ satisfy the following relationship:

$$N_{SD,short} = \text{round}(N_{SD} \div \text{N} \div M) \times M \quad (3)$$

Herein, round(x) indicates to round off $x$, $x = N_{SD} \div \text{N} \div M$, and M is a positive integer. For example, if $N_{SD}$ = 4388, N=4, and M=6, $N_{SD,short}$ = round(4388 ÷ 4 ÷ 6) × 6 = round(182.833) × 6 = 183 × 6 = 1098. Specific calculation processes of other values are not enumerated herein. The feature 3 may be effectively satisfied based on Formula (3). For a specific determining manner of M, refer to the following descriptions. Details are not described herein.

**Feature 5:** $N_{SD,short}$ may be determined based on values of $N_{SD,short}$ corresponding to at least two RUs/at least two MRUs/at least one RU and at least one MRU.

The at least two RUs/at least two MRUs/at least one RU and the at least one MRU may be obtained by splitting the RU or MRU corresponding to the target user. The RU or MRU corresponding to the target user may be split, to obtain the at least two RUs/at least two MRUs/at least one RU and the at least one MRU, and then $N_{SD,short}$ corresponding to the target user is determined based on the values of $N_{SD,short}$ corresponding to the at least two RUs/at least two MRUs/at least one RU and the at least one MRU. For example, a sum of the values of $N_{SD,short}$ corresponding to the at least two RUs/at least two MRUs/at least one RU and the at least one MRU is $N_{SD,short}$ corresponding to the target user.

Table 6 shows an example of the relationship between the RU or MRU corresponding to the target user and $N_{SD,short}$ when N=4, M=6, the MCS index ranges from y to z, and the MCS index is q. For specific descriptions of y, z, and q, refer to Table 1. Details are not described herein again. For related descriptions of MCS=15 and MCSE[0, 13], refer to Table 1. Details are not described herein again. For the relationship between the RU/MRU and $N_{SD}$, refer to Table 2. Details are not described herein again.

Table 6

| RU or MRU size | RU/MRU | Value of $N_{SD,short}$ | |
| --- | --- | --- | --- |
| | | MCSE[y, z] | MCSE q |
| 4x996+484-tone | 4x996 (984)+484 (120) | 1104 | 552 |
| 5x996-tone | 4x996 (984)+996 (240) | 1224 | 612 |
| 5x996+484-tone | 4x996 (984)+996 (240)+484 (120) | 1344 | 672 |
| 6x996-tone | 4x996 (984)+2x996 (492) | 1476 | 738 |
| 6x996+484-tone | 4x996 (984)+2x996 (492)+484 (120) | 1596 | 798 |
| 7x996-tone | 4x996 (984)+2x996 (492)+996 (240) | 1716 | 858 |
| 7x996+484-tone | 4x996 (984)+2x996 (492)+996 (240)+484 (120) | 1836 | 918 |
| 8x996-tone | 4x996 (984)+4x996 (984) | 1968 | 984 |

Content in brackets in Table 6 indicates a value of $N_{SD,short}$ corresponding to the MRU.

For example, a value of $N_{SD,short}$ corresponding to 4x996+484-tone may be determined based on a value of $N_{SD,short}$ corresponding to 4x996-tone and a value of $N_{SD,short}$ corresponding to 484-tone. For example, a value of $N_{SD,short}$ corresponding to 4x996-tone is 984, a value of $N_{SD,short}$ corresponding to 484-tone is 120, and a value of $N_{SD,short}$ corresponding to 4x996+484-tone may be 984+120=1104. 4x996-tone and 484-tone that correspond to 4x996+484-tone in Table 6 are merely an example. For example, 4x996+484-tone may also correspond to 2x996-tone, 2x996-tone, and 484-tone. Examples are not enumerated herein.

For another example, a value of $N_{SD,short}$ corresponding to 5x996-tone may be determined based on a value of $N_{SD,short}$ corresponding to 4x996-tone and a value of $N_{SD,short}$ corresponding to 996-tone. For example, a value of $N_{SD,short}$ corresponding to 4x996-tone is 984, a value of $N_{SD,short}$ corresponding to 996-tone is 240, and a value of $N_{SD,short}$ corresponding to 5x996-tone may be 984+240=1104.

For another example, a value of $N_{SD,short}$ corresponding to 6x996-tone may be determined based on a value of $N_{SD,short}$ corresponding to 4x996-tone and a value of $N_{SD,short}$ corresponding to 2x996-tone. For example, a value of $N_{SD,short}$ corresponding to 4x996-tone is 984, a value of $N_{SD,short}$ corresponding to 2x996-tone is 492, and a value of $N_{SD,short}$ corresponding to 6x996-tone may be 984+492=1476. Specific determining manners of values of $N_{SD,short}$ corresponding to different RUs or MRUs are not enumerated herein.

The division manner shown in Table 6 is merely an example. For example, a value of $N_{SD,short}$ corresponding to 6x996-tone may alternatively be determined based on a value of $N_{SD,short}$ corresponding to 4x996-tone, a value of $N_{SD,short}$ corresponding to 996-tone, and a value of $N_{SD,short}$ corresponding to 996-tone. The foregoing division manner is not limited in this embodiment of this application.

The relationship between the RU or MRU corresponding to the target user and $N_{SD,short}$ when N=4, M=6, and the MCS index is o may be shown in Table 3. Details are not described herein again. Table 7 shows an example of the relationship between the RU or MRU corresponding to the target user and $N_{SD,short}$ when N=4, M=6, the MCS index ranges from y to z, and the MCS index is q. For specific descriptions of y, z, and q, refer to Table 1. Details are not described herein again. For related descriptions of MCS=15 and MCSE[0, 13], refer to Table 1. Details are not described herein again. For the relationship between the RU/MRU and $N_{SD}$, refer to Table 2. Details are not described herein again.

Table 7

| RU or MRU size | RU/MRU | Value of $N_{SD,short}$ | |
| --- | --- | --- | --- |
| | | MCSE[y, z] | MCS= q |
| 4x996+484-tone | 4x996 (984)+484 (120) | 1104 | 552 |
| 5x996-tone | 4x996 (984)+996 (246) | 1230 | 615 |
| 5x996+484-tone | 4x996 (984)+996 (246)+484 (120) | 1350 | 675 |
| 6x996-tone | 4x996 (984)+2x996 (492) | 1476 | 738 |
| 6x996+484-tone | 4x996 (984)+2x996 (492)+484 (120) | 1596 | 798 |
| 7x996-tone | 4x996 (984)+2x996 (492)+996 (246) | 1722 | 861 |
| 7x996+484-tone | 4x996 (984)+2x996 (492)+996 (246)+484 (120) | 1842 | 921 |
| 8x996-tone | 4x996 (984)+4x996 (984) | 1968 | 984 |

Content in brackets in Table 7 indicates a value of $N_{SD,short}$ corresponding to the MRU. A value of $N_{SD,short}$ corresponding to 996-tone shown in Table 6 is 240, and a value of $N_{SD,short}$ corresponding to 996-tone shown in Table 7 is 246. Table 7 may also be referred to as a method for correcting 996. A value of $N_{SD,short}$ corresponding to 996-tone is corrected, so that a value of $N_{SD,short}$ corresponding to 2x996-tone may be two times of a value of $N_{SD,short}$ corresponding to 996-tone. Table 7 shows an example in which the value of $N_{SD,short}$ corresponding to 996-tone is corrected. In a specific implementation, a value of $N_{SD,short}$ corresponding to an RU/MRU shown in the 1 st column may be determined by modifying a value of $N_{SD,short}$ corresponding to another MRU. Corrected $N_{SD,short}$ corresponding to 996-tone shown in Table 7 is merely an example. For example, $N_{SD,short}$ corresponding to 996-tone may alternatively be corrected to another value. Examples are not enumerated herein.

For the relationship between the RU or MRU corresponding to the target user and $N_{SD,short}$ when N=4, M=6, and the MCS index is o, refer to Table 3. Details are not described herein again. For a specific manner of the feature 5, refer to a value obtaining manner of $N_{SD,short}$ in 802.11be, for example, the following related descriptions in Table 9.

In an example, $N_{SD,short}$ may satisfy any one of the feature 2 to the feature 5.

In another example, the parameter $N_{SD,short}$ may satisfy the feature 1 and at least two of the feature 2 to the feature 5. The following shown example is merely an example, but should not be construed as a limitation on this embodiment of this application.

For example, for the at least two target users corresponding to the PPDU, quantities $N_{Excess,u}$ of excess data bits in last OFDM symbols of data fields of different target users are different, and $N_{SD,short}$ corresponding to the different target users may satisfy any one of the feature 2 to the feature 5. For example, if a quantity $N_{Excess,u}$ of excess data bits in the last OFDM symbol of a data field of the target user 1 is in a shadow area in FIG. 3, $N_{SD,short}$ corresponding to the target user 1 may satisfy the feature 2. For another example, if a quantity $N_{Excess,u}$ of excess data bits in the last OFDM symbol of a data field of the target user 2 is in a shadow area in FIG. 4, $N_{SD,short}$ corresponding to the target user 2 may satisfy the feature 3. The target user 1 and the target user 2 are target users corresponding to the PPDU.

For another example, for the at least two target users corresponding to the PPDU, different target users correspond to different RUs/MRUs, and $N_{SD,short}$ corresponding to the different target users may satisfy any one of the feature 2 to the feature 5. If the RU/MRU corresponding to the target user is any one of the following: 4x996+484-tone, 5x996-tone, 5x996+484-tone, and 6x996-tone, $N_{SD,short}$ corresponding to the target user may satisfy the feature 2. For another example, if the RU/MRU corresponding to the target user is any one of the following: 6x996+484-tone, 7x996-tone, 7x996+484-tone, and 8x996-tone, $N_{SD,short}$ corresponding to the target user may satisfy the feature 3. The RU/MRUs obtained through division herein is merely an example, but should not be construed as a limitation on this embodiment of this application. The feature 2 and the feature 3 are used as examples herein. In a specific implementation, in a case of different RUs/MRUs, $N_{SD,short}$ corresponding to the target user may also satisfy the feature 4 or the feature 5, and the like. Examples are not enumerated herein.

In addition to the data field, the PPDU may further include a preamble field. For example, the preamble field may include at least one of the following: a legacy short training field (legacy short training field, L-STF), a legacy long training field (legacy long training field, L-LTF), legacy signaling (legacy signaling, L-SIG), repeated legacy signaling (repeated L-SIG, RL-SIG), and universal signaling (universal signaling, U-SIG). In an example, for a UHR PPDU, a preamble field in the UHR PPDU may further include at least one of the following: UHR-SIG, UHR-STF, and UHR-LTF. In another example, for an IMMW PPDU, a preamble field in the IMMW PPDU may further include at least one of the following: IMMW-SIG, IMMW-STF, and IMMW-LTF. The foregoing PPDUs are merely examples, and a specific format of the PPDU is not limited in this embodiment of this application.

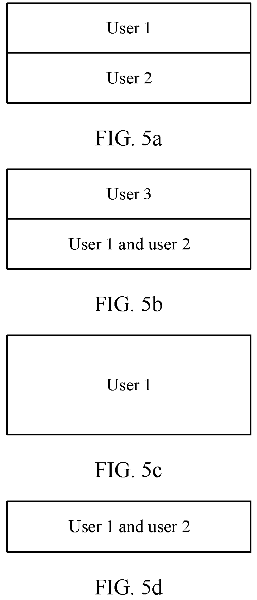

The following uses an example to describe a transmission mode of the PPDU in this embodiment of this application. The PPDU may include a single-user transmission mode or a multi-user transmission mode. The following transmission modes shown in FIG. 5a to FIG. 5d are merely examples. With evolution of standards, another transmission mode may further appear subsequently. This is not limited in this embodiment of this application.

For example, the transmission mode of the PPDU may include:

OFDMA mode: The PPDU bandwidth is divided into more than one RU or MRU. The RU or MRU may be allocated to one target user or a plurality of target users. A case in which one RU or MRU is further allocated to a plurality of target users may be referred to as an OFDMA+MU-MIMO transmission mode. A case in which the RU or MRU is allocated to one target user may be referred to as non-MU-MIMO OFDMA. FIG. 5a is a diagram of a non-MU-MIMO OFDMA transmission mode according to an embodiment of this application. For the OFDMA mode, a user 1 and a user 2 each may occupy a partial bandwidth of the PPDU. To be specific, the user 1 and the user 2 may occupy different RUs or MRUs in the PPDU bandwidth, or the user 1 and the user 2 may respectively correspond to different RUs or MRUs in the PPDU bandwidth. FIG. 5b is a diagram of an OFDMA+MU-MIMO transmission mode according to an embodiment of this application. An RU or MRU used by the user 1 for MU-MIMO transmission and an RU or MRU used by the user 2 for MU-MIMO transmission are the same, and the user 1 (or the user 2) and a user 3 each occupy a partial bandwidth of the PPDU.

SU or channel sounding NDP transmission mode: The PPDU is transmitted to one target user. Unicast, broadcast, or multi-wave transmission may be performed for the target user FIG. 5c is a diagram of an SU or channel sounding NDP transmission mode according to an embodiment of this application. The user 1 may occupy an entire bandwidth of the PPDU.

Non-OFDMA MU-MIMO transmission mode: One RU or MRU is present in the PPDU bandwidth, and is simultaneously allocated to more than one user. FIG. 5d is a diagram of a non-OFDMA MU-MIMO transmission mode according to an embodiment of this application. An RU or MRU used by the user 1 for MU-MIMO transmission and an RU or MRU used by the user 2 for MU-MIMO transmission are the same. The user 1 and the user 2 each may occupy the entire bandwidth of the PPDU.

Usually, regardless of how many target users correspond to the PPDU, or regardless of the transmission mode of the PPDU, a generation process of the PPDU involves pre-forward error correction coding (forward error code, FEC) physical padding (Pre-FEC PHY padding) and pre-FEC MAC padding. The parameter $N_{SD,short}$ is involved in a process of pre-FEC physical padding and pre-FEC MAC padding. Therefore, the transmission modes shown in FIG. 5a to FIG. 5d should not be understood as a limitation on this embodiment of this application.

202: The first communication apparatus sends the PPDU, and correspondingly, the second communication apparatus receives the PPDU.

203: The second communication apparatus parses the PPDU.

For example, the second communication apparatus may detect (detect) a legacy preamble part of the PPDU, to obtain a standard format to which the PPDU belongs. For example, the second communication apparatus may obtain a frame format corresponding to the PPDU based on the legacy preamble part. For example, the PPDU is a UHR PPDU or an IMMW PPDU. By detecting the preamble field of the PPDU, the second communication apparatus can effectively demodulate a data field corresponding to the second communication apparatus in the PPDU.

For example, the preamble field may include a SIG field, the SIG field in the PPDU may include an LDPC extra symbol segment field and a pre-FEC padding factor field, and the pre-FEC padding factor field may indicate a value of the parameter $a$. For example, the LPDC extra symbol segment field may indicate a reason for the value of the parameter $a$. For example, if the LDPC extra symbol segment field is 1, it indicates that the value of the parameter $a$ is increased by 1 because a condition (a condition shown in Formula (14)) is not met. For example, when the PPDU is an EHT PPDU, the SIG field may be an EHT-SIG field. For another example, when the PPDU is a UHR PPDU, the SIG field may be a UHR-SIG field. For another example, when the PPDU is an IMMW PPDU, the SIG field may be an IMMW-SIG field. Specific names of the SIG field are not enumerated herein. The foregoing is shown by using an example in which the LDPC extra symbol segment field and the pre-FEC padding factor field are carried in the SIG field in the preamble field, but should not be construed as a limitation on this embodiment of this application. The second communication apparatus parses the data field based on the value of the parameter $a$ and at least one table (or a relationship indicated by any row in any table) in Table 1 to Table 7 stored in the second communication apparatus.

For example, the second communication apparatus may further learn of an RU/MRU corresponding to the second communication apparatus and decoding duration based on the preamble field; learn of, based on the decoding duration, a total quantity of OFDM symbols occupied by the data field; and learn of $N_{SD,short}$ based on the RU/MRU and a table (Table 1 to Table 10) stored in the second communication apparatus. In this way, the second communication apparatus may learn of a specific location of the data field that needs to be decoded, to obtain payload information in the data field.

In this embodiment of this application, the first communication apparatus generates the PPDU based on the parameter $N_{SD,short}$ that satisfies the foregoing features. This can effectively reduce an encoding time of the first communication apparatus and a decoding time of a second communication apparatus, thereby improving encoding/decoding efficiency.

Currently, the 802.11ax standard specifies values of $N_{SD,short}$ of different RUs, including dual carrier modulation (dual carrier modulation, DCM)=0 and DCM=1. When DCM is 0, the value of $N_{SD,short}$ is approximately 1/4 of $N_{SD}$; and when DCM is 1, the value of $N_{SD,short}$ is approximately 1/2 of $N_{SD,short}$ when DCM=0.

Table 8 shows values of $N_{SD,short}$ of different RUs.

Table 8

| RU size | $N_{SD,short}$ | |
|---|---|---|
| | DCM=0 | DCM=1 |
| 26-tone | 6 | 2 |
| 52-tone | 12 | 6 |
| 106-tone | 24 | 12 |
| 242-tone | 60 | 30 |
| 484-tone | 120 | 60 |
| 996-tone | 240 | 120 |
| 2x996-tone | 492 | 246 |

It can be learned from Table 8 that when DCM=0, the value of $N_{SD,short}$ is random, and is shown as follows:

(1) 26-tone corresponds to $N_{SD}$=24, 52-tone corresponds to $N_{SD}$=48, and values of $N_{SD,short}$ corresponding to the two RUs are equal to 1/4 of respective values of $N_{SD}$.
(2) 106-tone corresponds to $N_{SD}$=102, 996-tone corresponds to $N_{SD}$=980, and both values of $N_{SD,short}$ corresponding to the two RUs are less than 1/4 of respective values of $N_{SD}$.
(3) 242-tone corresponds to $N_{SD}$=234, 484-tone corresponds to $N_{SD}$=468, 2x996-tone corresponds to $N_{SD}$=1960, and all values of $N_{SD,short}$ corresponding to the three RUs are greater than 1/4 of respective values of $N_{SD}$.
(4) A value of $N_{SD}$ of 2x996-tone is two times a value of $N_{SD}$ of 996-tone, but values of $N_{SD,short}$ corresponding to 2x996-tone and 996-tone are not in a double relationship.

It can be learned from (1) to (4) that, even for same DCM=0 or DCM=1, 242-tone, 484-tone, and 2x996-tone correspond to larger values, which increases encoding time and decoding time, and reduces encoding and decoding efficiency.

Currently, the 802.11be standard introduces a larger bandwidth, and specifies values of $N_{SD,short}$ of different MRUs, including EHT-MCS∈[0, 13], EHT-MCS=15, and EHT-MCS=14. For EHT-MCS∈[0, 13] and EHT-MCS=15, all newly added values of $N_{SD,short}$ may be obtained by adding values of $N_{SD,short}$ of an RU in 802.11ax. For example, $N_{SD,short}$ of 52+26-*tone*=$N_{SD,short}$ of 52-tone+$N_{SD,short}$ of 26-tone. $N_{SD,short}$ of 3x996-tone=$N_{SD,short}$ of 2x996-tone+$N_{SD,short}$ of 996-tone.

Table 9 shows an example of values of $N_{SD,short}$ of different RUs.

Table 9

| RU size | $N_{SD,short}$ | |
|---|---|---|
| | MCS∈[0, 13] | MCS=15 |
| 26-tone | 6 | 2 |
| 52-tone | 12 | 6 |
| 52+26-tone | 18 | 8 |
| 106-tone | 24 | 12 |

(continued)

| RU size | $N_{SD,short}$ | |
|---|---|---|
| | MCS$\in$[0, 13] | MCS=15 |
| 106+26-tone | 30 | 14 |
| 242-tone | 60 | 30 |
| 484-tone | 120 | 60 |
| 484+242-tone | 180 | 90 |
| 996-tone | 240 | 120 |
| 996+484-tone | 360 | 180 |
| 996+484+242-tone | 420 | 210 |
| 2x996-tone | 492 | 246 |
| 2x996+484-tone | 612 | N/A |
| 3x996-tone | 732 | 366 |
| 3x996+484-tone | 852 | N/A |
| 4x996-tone | 984 | 492 |

Table 10 shows an example of a value of $N_{SD,short}$ when MCS=14.

Table 10

| Bandwidth (bandwidth) | $N_{SD,short}$ |
|---|---|
| 80 MHz | 60 |
| 160 MHz | 120 |
| 320 MHz | 246 |

For EHT-MCS=14, $N_{SD,short}$ of 80 MHz (996-tone) is equal to $N_{SD,short}$ of 484-tone when EHT-MCS=15; $N_{SD,short}$ of 160 MHz (2x996-tone) is equal to $N_{SD,short}$ of 996-tone when EHT-MCS=15; and $N_{SD,short}$ of 320 MHz (4x996-tone) is equal to $N_{SD,short}$ of 2x996-tone when EHT-MCS=15.

Because a value of $N_{SD,short}$ in 802.11be is inherited from 802.11ax, in a case of a larger bandwidth, if a method inherited from 802.11ax is still used to calculate $N_{SD,short}$, encoding/decoding time is further increased, and encoding/-decoding efficiency is reduced.

The following describes the process of pre-FEC physical padding or pre-FEC MAC padding in this embodiment of this application.

N pre-FEC padding boundaries (boundaries) may be used to divide frequency domain resources corresponding to last OFDM symbols of different users in the PPDU into N segments (segment). Pre-FEC padding may extend to one of N possible boundaries. The N boundaries may be represented by one pre-FEC padding factor (pre-FEC padding factor) parameter *a*. For related descriptions of *a,* refer to the descriptions of step 201 in FIG. 2.

The following uses N=4 as an example for description. FIG. 6 shows an example in which a=1 in the last OFDM symbol. A scrambler (scrambler) represents scrambling, and an FEC may be an LDPC code, or may be a BCC code. This is not limited in this embodiment of this application. $N_{CBPs,last,u}$ represents a quantity of encoded bits in the last OFDM symbol occupied by a data field corresponding to a user u, and $N_{CBPS,u}$ represents a quantity of encoded bits in each OFDM symbol (other than the last OFDM symbol) occupied by the data field corresponding to the user u.

The following describes a calculation process of the parameter *a* and $N_{SYM}$ in a padding process. The following shown process is applicable to single-user transmission and multi-user transmission. In a case of multi-user transmission, all target users may share a same value of a and a same value of $N_{SYM}$. Details are as follows.

(1) In an MU PPDU, the first communication apparatus calculates a quantity of excess data bits of the user u in the last OFDM symbol:

$$N_{Excess,u} = \left(8 \cdot \text{APEP\_LENGTH}_u + N_{tail,u} + N_{service}\right) \bmod N_{DBPS,u} \quad (4)$$

Herein, $APEP\_LENGTH_u$ represents a data length (measured in a form of bytes) of the user u, $N_{tail,u}$ represents tail bits of each encoder of the user u, $N_{service}$ represents a quantity of service bits (for example, 16 bits), and $N_{DBPS,u}$ represents a data bit (determined based on a selected MCS) in each OFDM symbol occupied by the data field corresponding to the user u.

(2) Based on $N_{Excess,u}$ the first communication apparatus calculates an initial pre-FEC padding factor $a_{init,u}$ and an initial quantity $N_{SYM,init,u}$ of OFDMs of the user u:

$$a_{init,u} = \begin{cases} 4, if\, N_{excess,u} = 0 \\ min\left(\left\lceil \frac{N_{excess,u}}{N_{DBPS,short,u}} \right\rceil, 4\right), otherwise \end{cases} \quad (5)$$

$$N_{SYM,init,u} = \left\lceil \frac{8 \times APEP\_LENGTH_u + N_{tail,u} + N_{service}}{N_{DBPS,u}} \right\rceil \quad (6)$$

Herein, $N_{DBPS,short,u} = N_{CBPS,short,u} \cdot R_u$, and $R_u$ is a bitrate of the user u (which is also determined based on the MCS).

$N_{CBPS,short,u} = N_{SD,short,u} \cdot N_{SS,u} \cdot N_{BPSCS,u}$. Herein, $N_{SD,short,u}$ is determined based on $N_{SD,short}$ of an RU/MRU corresponding to the user u (for example, $N_{SD,short,u} = N_{SD,short}$, - $N_{SS,u}$ represents a quantity of streams of the user u, and $N_{BPSCS,u}$ represents a modulation order of the user u (for example, $N_{BPSCS,u} = 1$ in a case of BPSK or $N_{BPSCS,u} = 4$ in a case of 16QAM) (or determined based on an MCS).

Formula (5) may be described as follows: When a quantity of excess data bits of the user u is 0, it indicates that the first communication apparatus needs to pad the last entire OFDM symbol, and therefore $a=4$; or when a quantity of excess data bits of the user u is unequal to 0, it indicates that the first communication apparatus needs to pad at least one segment of the last OFDM symbol. For example, if $a=1$, the 1st segment of the last OFDM symbol may be used to carry the excess data bits of the user u. When the quantity of excess data bits is insufficient to occupy the entire 1st segment, the first communication apparatus may use a padding bit. For example, the 1st segment may not only carry the excess data bits of the user u, but also carry the padding bit. For example, if $a=2$, the 1st segment and the 2nd segment of the last OFDM symbol may be used to carry the excess data bits of the user u. For example, the first communication apparatus may also use a padding bit to pad the 2nd segment. For example, the 1st segment may not only carry the excess data bits of the user u, but also carry the padding bit.

(3) A set S of users who use longest encoded duration is found from all users (or may be: calculating the maximum value of the number of OFDM symbols occupied by each user), and one value is selected from the set S as $u_{max}$:

$$S = \arg\max_{u=0}^{N_{user,tatal}-1}\left(N_{SYM,init,u} - 1 + \frac{a_{init,u}}{4}\right) \quad (7)$$

Then, $a_{init}$ and a quantity $N_{SYM,init}$ of OFDMs that are shared by all the users are calculated as follows:

$$N_{SYM,init} = N_{SYM,init,u_{max}} \quad (8)$$

$$a_{init} = a_{init,u_{max}} \quad (9)$$

(4) An initial data bit and an initial encoded bit of the last OFDM symbol of each user are calculated as follows:

$$N_{DBPS,last,init,u} = \begin{cases} a_{init,u} \times N_{DBPS,short,u} \; if \; a_{init} < 4 \\ N_{DBPS,u} \; if \; a_{init} = 4 \end{cases} \quad (10)$$

$$N_{CBPS,last,init,u} = \begin{cases} a_{init,u} \times N_{CBPS,short,u} \; if \; a_{init} < 4 \\ N_{CBPS,u} \; if \; a_{init} = 4 \end{cases} \quad (11)$$

(5) For each user who uses LDPC encoding, a quantity of bits $N_{pld,u}$ before encoding and a quantity $N_{avbits,u}$ of encoded bits are calculated as follows:

$$N_{pld,u} = \left(N_{SYM,init} - 1\right)N_{DBPS,u} + N_{DBPS,last,init,u} \quad (12)$$

$$N_{avbits,u} = \left(N_{SYM,init} - 1\right)N_{CBPS,u} + N_{CBPS,last,init,u} \quad (13)$$

For a PPDU bandwidth greater than 320 MHz, using low-density parity-check (low-density parity-check, LDPC) may effectively improve encoding performance and encoding efficiency. Therefore, in this embodiment of this application, LDPC encoding is used as an example for description. With evolution of standards, another type of coding scheme may further appear subsequently. This is not limited in this embodiment of this application.

(5.1) Encoding is performed in an LDPC encoding process. It is assumed that at least one user meets the following conditions:

$$\left(N_{punc,u} > 0.1 \times N_{CW,u} \times L_{LDPC,u} \times (1 - R_u)\right) AND \left(N_{shrt,u} < 1.2 \times N_{punc,u} \times \right.$$

$$\left. \frac{R_u}{1-R_u}\right) is\ true\ or\ if\ N_{punc,u} > 0.3 \times N_{CW,u} \times L_{LDPC,u} \times (1 - R_u)\ is\ true \quad (14)$$

Herein, $N_{punc,u}$ represents a puncturing amount of the user u, $N_{CW,u}$ represents a codeword (codewords) of the user u, $L_{LDPC,u}$ represents a code length of the LDPC, and $N_{shrt,u}$ represents a quantity of shortened bits of the user u. The foregoing condition is described by using text as follows: (1) The puncturing amount exceeds 10% of check bits, and a proportion of the puncturing amount in a total quantity of check bits is greater than 5/6 of a proportion of the quantity of shortened bits in a total quantity of system bits. (2) The puncturing amount exceeds 30% of a total quantity of check bits. If the condition is met, an LDPC extra symbol segment (LDPC extra symbol segment) field in EHT-SIG/UHR-SIG/IMMW-SIG (which is only an example) is set to 1, and all users who use LDPC encoding need to recalculate $N_{avbits,u}$ and $N_{punc,u}$.

*(5.2)* $N_{avbits,u}$ and $N_{punc,u}$ are recalculated:

$$N_{avbits,u} = \begin{cases} N_{avbits,u} + N_{CBPS,u} - 3N_{CBPS,short,u} & if\ a_{init} = 3 \\ N_{avbits,u} + N_{CBPS,short,u} & otherwise \end{cases} \quad (15)$$

$$N_{punc,u} = \max\left(0, \left(N_{CW,u} \times L_{LDPC,u}\right) - N_{avbits,u} - N_{shrt,u}\right) \quad (16)$$

(5.3) a and $N_{SYM}$ of all the users need to be recalculated:

$$\begin{cases} N_{SYM} = N_{SYM,init} + 1\ and\ a = 1, if\ a_{init} = 4 \\ N_{SYM} = N_{SYM,init}\ and\ a = a_{init} + 1, otherwise \end{cases} \quad (17)$$

(5.4) If none of the users who use LDPC encoding meets the two conditions shown in (5.1), or all the users use BCC encoding, the LDPC extra symbol segment field in EHT-SIG/UHR-SIG/IMMW-SIG (which is only an example) is set to 0. Then, a and $N_{SYM}$ are calculated as follows:

$$N_{SYM} = N_{SYM,init} \quad (18)$$

$$a = a_{init} \quad (19)$$

A process of calculating a and $N_{SYM}$ shown in Formula (4) to Formula (19) is merely an example. With evolution of standards, a and $N_{SYM}$ may be calculated in another calculation process. This is not limited in this embodiment of this application.

The following describes a design solution of M by using Formula (5) and Formula (6) as an example.

In this embodiment of this application, a value of M may ensure that $N_{DBPS,short,u}$ is an integer. Encoding can be smoothly ensured by ensuring that $N_{DBPS,short,u}$ is an integer.

As shown in Formula (5) and Formula (6), $N_{DBPS,short,u} = N_{CBPS,short,u} \cdot R_u$ and $N_{CBPS,short,u} = N_{SD,short,u} \cdot N_{SS,u} \cdot N_{BPSCS,u}$. Therefore, when the value of M ensures that $N_{DBPS,short,u}$ is an integer, $N_{SD,short,u} \cdot N_{BPSCS,u} \cdot R_u$ may also be an integer.

Usually, a combination of $N_{BPSCS,u} \cdot R_u$ may be $\left[\frac{1}{2}, 1, \frac{3}{2}, 2, 3, 4, \frac{9}{2}, 5, 6, \frac{20}{3}, \frac{15}{2}, \frac{25}{3}, 9, 10\right]$. Therefore, when M=6 (a least common multiple of denominators in the combination), it can be effectively ensured that $N_{DBPS,short,u}$ is an integer. In addition, Formula (1) to Formula (3) may effectively ensure that $N_{SD,short,u}$ is a multiple of 6.

Certainly, when a new bitrate appears in a subsequent standard, M may also be determined in the foregoing manner. For example, M may be equal to the least common multiple of the combination of $N_{BPSCS,u} \cdot R_u$.

In this embodiment of this application, the method shown in Formula (1) to Formula (3) may not only ensure that $N_{DBPS,short,u}$ is an integer, but also ensure that $N_{SD,short}$ is a multiple of M. In this way, calculation is facilitated, and no table of $N_{DBPS,short,u}$ and $N_{CBPS,short,u}$ needs to be designed for each RU or each parameter *a*, thereby effectively reducing operation complexity. For example, when $N_{SD,short}$ is not a multiple of M, corresponding $N_{SD,short}$ needs to be separately indicated based on different bitrates and modulation schemes, thereby increasing operation complexity.

The following describes the simulation result in this embodiment of this application.

FIG. 7a and FIG. 7b are diagrams of simulation results according to an embodiment of this application. FIG. 7a and FIG. 7b are diagrams of a relationship between a data length and a. A horizontal coordinate indicates the data length, and a vertical coordinate indicates different values of a.

4x996-tone is used as an example, a coding and modulation scheme of 256-QAM and a 3/4 bitrate is selected, and two values of $N_{SD,short}$ are used: 984 (a value shown in Table 9) and 978 (a value less than 984).

FIG. 7a shows that when $N_{SD,short}$=978, a is 2 in an interval from 1460 bytes to 1465 bytes, and a is 3 in an interval from 1466 bytes to 1480 bytes. When $N_{SD,short}$=984, a is 2 in an interval from 1460 bytes to 1474 bytes, and a is 3 in an interval from 1475 bytes to 1480 bytes.

FIG. 7b shows that when $N_{SD,short}$=978, the LDPC extra symbol segment field is set to 1 in the interval from 1460 bytes to 1465 bytes, and the LDPC extra symbol segment field is set to 0 in the interval from 1466 bytes to 1480 bytes. When $N_{SD,short}$=984, the LDPC extra symbol segment field is set to 1 in the interval from 1460 bytes to 1474 bytes, and the LDPC extra symbol segment field is set to 0 in the interval from 1475 bytes to 1480 bytes.

Therefore, it can be learned that, in the interval from 1466 bytes to 1474 bytes, a final value of a can be calculated in advance in a case of a smaller value of $N_{SD,short}$, and extra calculation needs to be added in a case of a larger value of $N_{SD,short}$.

The following describes communication apparatuses provided in embodiments of this application.

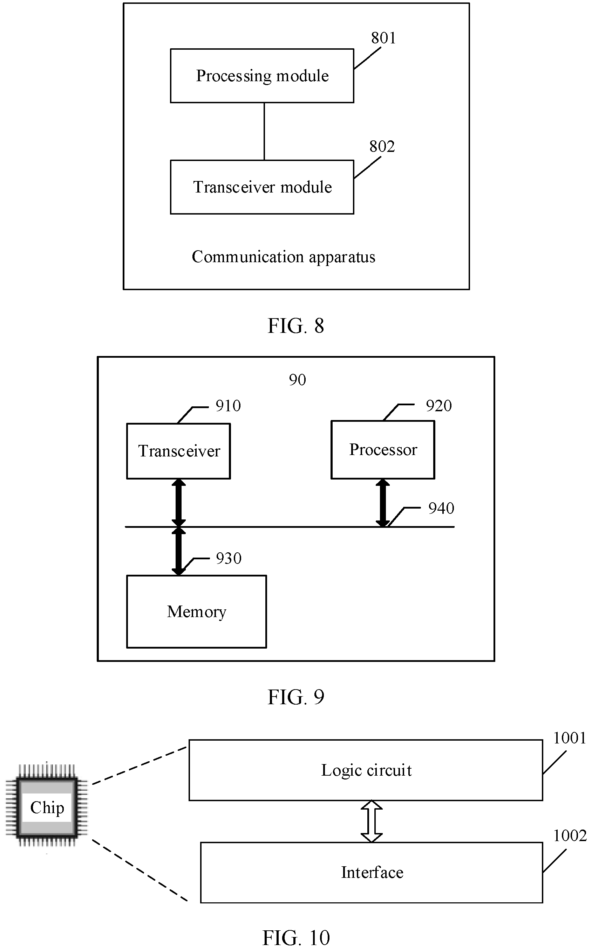

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely a logical functional division. In an actual implementation, another division manner may be used. The following describes in detail the communication apparatuses in embodiments of this application with reference to FIG. 8 to FIG. 10.

FIG. 8 is a diagram of a structure of a communication apparatus according to an embodiment of this application. As shown in FIG. 8, the communication apparatus includes a processing module 801 and a transceiver module 802. The transceiver module 802 may implement a corresponding communication function, and the processing module 801 is configured to perform data processing. For example, the transceiver module 802 may also be referred to as an interface, a communication interface, or a communication module.

In some embodiments of this application, the communication apparatus may be configured to perform actions performed by the first communication apparatus in the foregoing method embodiments. In this case, the communication apparatus may be a Wi-Fi device, or a component (for example, a chip, a system, or a functional module) configured in the Wi-Fi device. The transceiver module 802 is configured to perform a receiving/sending-related operation of the first communication apparatus in the foregoing method embodiments, and the processing module 801 is configured to perform a processing-related operation of the first communication apparatus in the foregoing method embodiments.

The processing module 801 is configured to generate a PPDU; and the transceiver module 802 is configured to send or output the PPDU.

For example, the PPDU corresponds to at least one target user, the PPDU includes a data field corresponding to the target user, a parameter $N_{SD,short}$ corresponding to the target user is determined based on a resource unit RU or multiple resource unit MRU used to transmit the data field and a modulation and coding scheme MCS of the data field, the parameter $N_{SD,short}$ is used to perform pre-forward error correction coding FEC padding on the data field, a value of a parameter $N_{SD}$ is equal to a total quantity of data subcarriers in the RU or MRU used to transmit the data field, the value of the parameter $N_{SD}$ is greater than 3920, $N_{SD,short} \leq \frac{1}{N} \times N_{SD}$, or $N_{SD,short} \geq \frac{1}{N} \times N_{SD}$, or

$$\left| N_{SD,short} - \frac{1}{N} N_{SD} \right| \le \varepsilon, \quad \varepsilon \le \frac{M}{2}$$, a value of N is the same as a quantity of segments obtained by dividing the last OFDM symbol occupied by the data field, N is a positive integer, and M is a positive integer.

For a relationship between the RU or MRU used to transmit the data field and $N_{SD,short}$, refer to the foregoing method embodiments. Details are not described herein again. For a feature that is satisfied by $N_{SD,short}$, refer to the descriptions of the feature 1 to the feature 5.

For example, the processing module 801 may include at least one of the following components: a pilot tone component, a constellation mapper, an encoder, a stream cyclic shift component, a spatial and frequency mapping component, an IDFT component, and a cyclic prefix insertion and windowing component. For example, the transceiver module 802 may include a radio frequency component and an antenna component. For example, the transceiver module 802 may include a pin assembly.

Still as shown in FIG. 8, in some other embodiments of this application, the communication apparatus may be configured to perform actions performed by the second communication apparatus in the foregoing method embodiments. In this case, the communication apparatus may be a Wi-Fi device, or a component (for example, a chip, a system, or a functional module) configured in the Wi-Fi device. The transceiver module 802 is configured to perform a receiving/sending-related operation of the second communication apparatus in the foregoing method embodiments, and the processing module 801 is configured to perform a processing-related operation of the second communication apparatus in the foregoing method embodiments.

The transceiver module 802 is configured to input or receive a PPDU; and the processing module 801 is configured to parse the PPDU.

For example, the processing module 801 may include at least one of the following components: a pilot tone component, a cyclic prefix removal component, a DFT component, a deinterleaving component, a de-constellation component, a decoder, and a descrambler. For example, the transceiver module 802 may include a radio frequency component and an antenna component. For example, the transceiver module 802 may include a pin assembly.

Optionally, in the foregoing embodiments, the communication apparatus may further include a storage module. The storage module may be configured to store instructions and/or data (for example, the foregoing pilot initial value). The processing module 801 may read the instructions and/or the data in the storage module, so that the communication apparatus implements the foregoing method embodiments.

In the foregoing embodiments, for specific descriptions of terms or steps such as the PPDU, the target user, the data field, the parameter $N_{SD,short}$, and the parameter $N_{SD}$, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus in FIG. 8 falls within the protection scope of embodiments of this application. The following descriptions are merely examples, and a product form of the communication apparatus in embodiments of this application is not limited thereto.

In a possible implementation, in the communication apparatus shown in FIG. 8, the processing module 801 may be one or more processors, and the transceiver module 802 may be a transceiver; or the transceiver module 802 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A mode of connection between the processor and the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before processed information is input into the processor.

As shown in FIG. 9, a communication apparatus 90 includes one or more processors 920 and a transceiver 910.

For example, when the communication apparatus is configured to perform the steps, the methods, or the functions performed by the first communication apparatus, the processor 920 is configured to generate a PPDU; and the transceiver 910 is configured to send the PPDU.

For example, when the communication apparatus is configured to perform the steps, the methods, or the functions performed by the second communication apparatus, the transceiver 910 is configured to receive a PPDU; and the processor 920 is further configured to parse the PPDU.

In the foregoing embodiments, for specific descriptions of terms or steps such as the PPDU, the target user, the data field, the parameter $N_{SD,short}$, and the parameter $N_{SD}$, refer to the descriptions in the foregoing method embodiments. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 90 may further include one or more memories 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may cooperate with the memory 930. The processor 920 may execute the program instructions stored in the memory 930. Optionally, at least one of the one or more memories may be included in the processor. For example, the memory may be used for at least one of Table 1 to Table 10.

In this embodiment of this application, a specific connection medium among the transceiver 910, the processor 920, and the memory 930 is not limited. In this embodiment of this application, in FIG. 9, the memory 930, the processor 920, and the transceiver 910 are connected to each other through a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 920 is mainly configured to process a communication protocol and communication data, control the entire communication apparatus, execute a software program, and process data of the software program. The memory 930 is mainly configured to store the software program and the data. The transceiver 910 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 920 may read the software program from the memory 930, interpret and execute instructions of the software program, and process data of the software program. When data needs to be sent wirelessly, the processor 920 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 920. The processor 920 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 9, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 8, the processing module 801 may be one or more logic circuits, and the transceiver module 802 may be an input/output interface that is also referred to as a communication interface, an interface circuit, an interface, or the like. Alternatively, the transceiver module 802 may be a sending module and a receiving module. The sending module may be an output interface, and the receiving module may be an input interface. The sending module and the receiving module are integrated into one module, for example, an input/output interface. As shown in FIG. 10, a communication apparatus shown in FIG. 10 includes a logic circuit 1001 and an interface 1002. In other words, the processing module 801 may be implemented through the logic circuit 1001, and the transceiver module 802 may be implemented through the interface 1002. The logic circuit 1001 may be a chip, a processing circuit, an integrated circuit, a system on chip (system on chip, SoC), or the like. The interface 1002 may be a communication interface, an input/output interface, a pin, or the like. For example, FIG. 10 shows an example in which the communication apparatus is a chip. The chip includes a logic circuit 1001 and an interface 1002. For example, the chip may further include a memory. The memory may be configured to store $N_i$ time-varying function values, $N_i$ time-varying functions, a time-varying function matrix, and the like. Alternatively, the memory may be configured to store computer instructions. For example, the logic circuit 1001 may perform, based on the instructions, the methods, the functions, or the steps performed by the first communication apparatus. For another example, the logic circuit 1001 may perform, based on the instructions, the methods, the functions, or the steps performed by the second communication apparatus.

In this embodiment of this application, the logic circuit and the interface may be coupled to each other. A specific connection manner between the logic circuit and the interface is not limited in this embodiment of this application.

For example, when the communication apparatus is configured to perform the methods, the functions, or the steps performed by the first communication apparatus, the logic circuit 1001 is configured to generate a PPDU; and the interface 1002 is configured to output the PPDU.

For example, when the communication apparatus is configured to perform the methods, the functions, or the steps performed by the second communication apparatus, the interface 1002 is configured to input a PPDU; and the logic circuit 1001 is configured to parse the PPDU.

The communication apparatus shown in embodiments of this application may implement the methods provided in embodiments of this application in a form of hardware, or may implement the methods provided in embodiments of this application in a form of software. This is not limited in embodiments of this application.

In the foregoing embodiments, for specific descriptions of terms or steps such as the PPDU, the target user, the data field, the parameter $N_{SD,short}$, and the parameter $N_{SD}$, refer to the descriptions in the foregoing method embodiments. Details are not described herein again. For specific implementations of the embodiments shown in FIG. 10, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiments are merely examples. For example, division into modules is merely logical functional division. In an actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   generating a physical layer protocol data unit PPDU, wherein the PPDU corresponds to at least one target user, the PPDU comprises a data field corresponding to the target user, a parameter $N_{SD,short}$ corresponding to the target user is determined based on a resource unit RU or multiple resource unit MRU used to transmit the data field and a modulation and coding scheme MCS of the data field, $N_{SD,short} \leq \frac{1}{N} \times N_{SD}$, or $N_{SD,short} \geq \frac{1}{N} \times N_{SD}$, or $\left| N_{SD,short} - \frac{1}{N} N_{SD} \right| \leq \varepsilon$, and $\varepsilon \leq \frac{M}{2}$, a value of the parameter $N_{SD}$ is equal to a total quantity of data subcarriers in the RU or MRU used to transmit the data field, the value of the parameter $N_{SD}$ is greater than 3920, a value of N is the same as a quantity of segments obtained by dividing the last OFDM symbol occupied by the data field, the parameter $N_{SD,short}$ indicates a quantity of data subcarriers corresponding to the 1 st segment in N segments, N is a positive integer, and M is a positive integer; and
   sending the PPDU.

2. A communication method, wherein the method comprises:

   receiving a physical layer protocol data unit PPDU, wherein the PPDU corresponds to at least one target user, the PPDU comprises a data field corresponding to the target user, a parameter $N_{SD,short}$ corresponding to the target user is determined based on a resource unit RU or multiple resource unit MRU used to transmit the data field and a modulation and coding scheme MCS of the data field, $N_{SD,short} \leq \frac{1}{N} \times N_{SD}$, or $N_{SD,short} \geq \frac{1}{N} \times N_{SD}$, or $\left| N_{SD,short} - \frac{1}{N} N_{SD} \right| \leq \varepsilon$, and $\varepsilon \leq \frac{M}{2}$, a value of the parameter $N_{SD}$ is equal to a total quantity of data subcarriers in the RU or MRU used to transmit the data field, the value of the parameter $N_{SD}$ is greater than 3920, the parameter $N_{SD,short}$ indicates a quantity of data subcarriers corresponding to the 1 st segment in N segments, a value of N is the same as a quantity of segments obtained by dividing the last OFDM symbol occupied by the data field, N is a positive integer, and M is a positive integer; and

parsing the PPDU.

3. The method according to claim 1 or 2, wherein when N=4, M=6, and an MCS index ranges from y to z, the RU or MRU used to transmit the data field and $N_{SD,short}$ satisfy the following relationship:

| RU or MRU size | Value of $N_{SD,short}$ |
|---|---|
| 4x996+484-tone | 1092 |
| 5x996-tone | 1224 |
| 5x996+484-tone | 1338 |
| 6x996-tone | 1470 |
| 6x996+484-tone | 1584 |
| 7x996-tone | 1710 |
| 7x996+484-tone | 1830 |
| 8x996-tone | 1956 |

wherein y and z are used to identify the MCS index, and both y and z are integers greater than or equal to 0.

4. The method according to claim 3, wherein $N_{SD,short}$ and $N_{SD}$ satisfy the following relationship:

$$N_{SD,short} = \text{floor}(N_{SD} \div N \div M) \times M$$

wherein floor(x) indicates to round down $x$, $x = N_{SD} \div N \div M$, and M is a positive integer.

5. The method according to claim 1 or 2, wherein when N=4, M=6, and an MCS index ranges from y to z, the RU or MRU used to transmit the data field and $N_{SD,short}$ satisfy the following relationship:

| RU or MRU size | Value of $N_{SD,short}$ |
|---|---|
| 4x996+484-tone | 1098 |
| 5x996-tone | 1230 |
| 5x996+484-tone | 1344 |
| 6x996-tone | 1470 |
| 6x996+484-tone | 1590 |
| 7x996-tone | 1716 |
| 7x996+484-tone | 1836 |
| 8x996-tone | 1962 |

wherein y and z are used to identify the MCS index, and both y and z are integers greater than or equal to 0.

6. The method according to claim 5, wherein $N_{SD,short}$ and $N_{SD}$ satisfy the following relationship:

$$N_{SD,short} = \text{ceil}(N_{SD} \div N \div M) \times M,$$

wherein

ceil(x) indicates to round up $x$ to a minimum integer, $x = N_{SD} \div N \div M$, and M is a positive integer.

7. The method according to claim 1 or 2, wherein when N=4, M=6, and an MCS index ranges from y to z, the RU or MRU used to transmit the data field and $N_{SD,short}$ satisfy the following relationship:

| RU or MRU size | Value of $N_{SD,short}$ |
|---|---|
| 4x996+484-tone | 1098 |
| 5x996-tone | 1224 |
| 5x996+484-tone | 1344 |
| 6x996-tone | 1470 |
| 6x996+484-tone | 1590 |
| 7x996-tone | 1716 |
| 7x996+484-tone | 1830 |
| 8x996-tone | 1962 |

wherein y and z are used to identify the MCS index, and both y and z are integers greater than or equal to 0.

8. The method according to claim 7, wherein $N_{SD,short}$ and $N_{SD}$ satisfy the following relationship:

$$N_{SD,short} = \mathrm{round}(N_{SD} \div \mathrm{N} \div \mathrm{M}) \times \mathrm{M}$$

wherein round(x) indicates to round off x, and $x = N_{SD} \div N \div M$.

9. The method according to any one of claims 4, 6, and 8, wherein y=0 and z=13.

10. The method according to any one of claims 1 to 9, wherein the bandwidth used to transmit the PPDU is 480 MHz or 640 MHz.

11. A communication apparatus, comprising a module configured to perform the method according to any one of claims 1 and 3 to 10, or comprising a module configured to perform the method according to any one of claims 2 to 10.

12. A communication apparatus, comprising a processor, wherein the processor is configured to perform the method according to any one of claims 1 and 3 to 10, or the processor is configured to perform the method according to any one of claims 2 to 10.

13. A communication apparatus, comprising a logic circuit and an interface, wherein the logic circuit is coupled to the interface; and
the interface is configured to input and/or output information, and the logic circuit is configured to perform the method according to any one of claims 1 and 3 to 10, or the logic circuit is configured to perform the method according to any one of claims 2 to 10.

14. A computer-readable storage medium, wherein the computer-readable storage medium is configured to store a computer program, and when the computer program is executed, the method according to any one of claims 1 and 3 to 10 is performed, or the method according to any one of claims 2 to 10 is performed.

15. A communication system, comprising a first communication apparatus and a second communication apparatus, wherein the first communication apparatus is configured to perform the method according to any one of claims 1 and 3 to 10, and the second communication apparatus is configured to perform the method according to any one of claims 2 to 10.

FIG. 1

FIG. 2

a_{small}=1　　　a_{small}=2　　　a_{small}=3　　　a_{small}=4

Area 1　　Area 2　　Area 3　　Area 4

(a)

a_{big}=1　　　a_{big}=2　　　a_{big}=3　　　a_{big}=4

Area 1　　Area 2　　Area 3　　Area 4

(b)

FIG. 3

a_{small}=1　　　a_{small}=2　　　a_{small}=3　　　a_{small}=4

(a)

a_{big}=1　　　a_{big}=2　　　a_{big}=3　　　a_{big}=4

(b)

FIG. 4

| User 1 |
| --- |
| User 2 |

FIG. 5a

| User 3 |
| --- |
| User 1 and user 2 |

FIG. 5b

| User 1 |
| --- |

FIG. 5c

| User 1 and user 2 |
| --- |

FIG. 5d

```
┌──────────────────────┬──────────────────────┐
│   Excess             │   Pre-FEC padding    │
│ information bits      │   bits (Pre-FEC      │
│   (excess            │   padding bits)      │
│ information bits)     │                      │
└──────────────────────┴──────────────────────┘
```

┌──────────────────────┐
│      Scrambler       │
│     (scrambler)      │
└──────────────────────┘

┌──────────────────────┐
│        FEC           │
└──────────────────────┘

Post-FEC padding bits
(post-FEC padding bits)

```
┌──────────────────────┬─────────┬─────────┬─────────┐
│  FEC output bits     │         │         │         │
│  (FEC output bits)   │         │         │         │
├──────────────────────┼─────────┴─────────┴─────────┤
│  N_CBPS,last,u bits  │      N_CBPS,u bits           │
└──────────────────────┴──────────────────────────────┘
```

FIG. 6

FIG. 7a

Length - ldpc extra symbol segment

$N_{SD,short} = 978$

$N_{SD,short} = 984$

ldpc extra symbol segment

APEP LENGTH (Bytes)

FIG. 7b

801

Processing module

802

Transceiver module

Communication apparatus

FIG. 8

90

910

Transceiver

920

Processor

940

930

Memory

FIG. 9

1001

Logic circuit

Chip

1002

Interface

FIG. 10

## INTERNATIONAL SEARCH REPORT

| International application No. |
| --- |
| **PCT/CN2024/121953** |

**A.   CLASSIFICATION OF SUBJECT MATTER**

H04L1/00(2006.01)i

According to International Patent Classification (IPC) or to both national classification and IPC

**B.   FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT; VEN; ENTXT; ENTXTC; CNKI; IEEE: 802.11bn, 前FEC, 后FEC, 物理层协议数据单元, 调制编码策略, pre FEC, post FEC, PPDU, MSC, RU, OFDM, 996, 3920

**C.   DOCUMENTS CONSIDERED TO BE RELEVANT**

| Category* | Citation of document, with indication, where appropriate, of the relevant passages | Relevant to claim No. |
| --- | --- | --- |
| X | 802.11 Working Group. "IEEE P802.11be™/D3.0 Draft Standard for Information Technology" *IEEE P802.11be™/D3.0*, 01 March 2023 (2023-03-01), pages 728, 746-747, 828-829, and 853 | 1, 2, 10-15 |
| X | US 2021360472 A1 (NXP USA INC.) 18 November 2021 (2021-11-18) description, paragraphs [17]-[83], and figures 1-6B | 1, 2, 10-15 |
| X | CN 116582222 A (HUAWEI TECHNOLOGIES CO., LTD.) 11 August 2023 (2023-08-11) description, paragraphs [92]-[169] | 1, 2, 10-15 |
| A | CN 116390250 A (HUAWEI TECHNOLOGIES CO., LTD.) 04 July 2023 (2023-07-04) entire document | 1-15 |
| A | WO 2022005194 A1 (LG ELECTRONICS INC.) 06 January 2022 (2022-01-06) entire document | 1-15 |
| A | WO 2023136598 A1 (LG ELECTRONICS INC.) 20 July 2023 (2023-07-20) entire document | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 November 2024** | **15 December 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121953**

| Patent document cited in search report | | | Publication date (day/month/year) | Patent family member(s) | | | Publication date (day/month/year) |
|---|---|---|---|---|---|---|---|
| US | 2021360472 | A1 | 18 November 2021 | US | 11496926 | B2 | 08 November 2022 |
| CN | 116582222 | A | 11 August 2023 | WO | 2022061894 | A1 | 31 March 2022 |
| | | | | EP | 4205319 | A1 | 05 July 2023 |
| CN | 116390250 | A | 04 July 2023 | WO | 2022002206 | A1 | 06 January 2022 |
| | | | | EP | 4171142 | A1 | 26 April 2023 |
| WO | 2022005194 | A1 | 06 January 2022 | KR | 20230007472 | A | 12 January 2023 |
| | | | | US | 2023261920 | A1 | 17 August 2023 |
| | | | | EP | 4152709 | A1 | 22 March 2023 |
| | | | | US | 2023239191 | A1 | 27 July 2023 |
| WO | 2023136598 | A1 | 20 July 2023 | | None | | |

Form PCT/ISA/210 (patent family annex) (July 2022)

**REFERENCES CITED IN THE DESCRIPTION**

**Patent documents cited in the description**

- CN 202311291495